# EUROPÄISCHE PATENTSCHRIFT

(11) **EP 3 609 663 B1**
(45) Veröffentlichungstag und Bekanntmachung des Hinweises auf die Patenterteilung: **07.06.2023**
(21) Anmeldenummer: 18717918.9
(22) Anmeldetag: 13.04.2018
(51) Int. Cl.: B27N 3/00, B27N 3/02, B32B 5/20, B32B 7/02, B32B 7/022, B29K 75/00, B29L 31/30, B32B 21/02, B32B 21/04, B32B 21/06, B32B 21/08, B32B 21/14, B32B 27/06, B32B 27/40, B32B 29/00, B32B 37/10, B32B 38/00, B29C 44/32

(54) **VERFAHREN ZUR HERSTELLUNG EINER LEICHTBAU-SANDWICHPLATTE**
PROCESS FOR MANUFACTURING A LIGHTWEIGHT SANDWICH PANEL
PROCÉDÉ POUR FABRIQUER UN PANNEAU SANDWICH LÉGER

(30) Priorität: 13.04.2017 DE 102017108078
(43) Veröffentlichungstag der Anmeldung: 19.02.2020
(73) Patentinhaber: Acmos Chemie KG, 28199 Bremen (DE); LSP - Hamburg UG - Haftungsbeschränkt, 22159 Hamburg (DE)
(72) Erfinder: KLYSZCZ-NASKO, Holger, 28199 Bremen (DE); HAILER, Oliver, 28199 Bremen (DE); NEUMANN, Sebastian, 28199 Bremen (DE); NEUBAUER, Gerald, 22159 Hamburg (DE); HELMRICH, Lutz, 21465 Wentorf (DE)
(74) Vertreter: RGTH
(86) Internationale Anmeldenummer: PCT/EP2018/059544
(87) Internationale Veröffentlichungsnummer: WO 2018/189377

(56) Entgegenhaltungen:
- WO-A2-2008/071618
- DE-A1-102005 061 922
- DE-B3-102012 020 145

## Beschreibung

Die vorliegende Erfindung bezieht sich auf ein Verfahren zur Herstellung einer Leichtbau-Sandwichplatte, wie es beispielsweise in der DE 10 2012 020 145 B3 beschrieben ist.

Leichtbau-Sandwichplatten (LSP) können aufgrund ihrer wesentlich geringeren Dichte gegenüber Holzspanplatten (HSP) und damit günstigem Verhältnis von Gewicht zu Festigkeit diese ohne weiteres ersetzen. Von Interesse sind dabei insbesondere qualitativ hochwertige Produkte, die möglichst kostengünstig hergestellt werden können. Häufig sind die bekannten Herstellungsverfahren jedoch weder kostengünstig noch Ressourcen-schonend und die erzeugten Leichtbau-Sandwichplatten erfüllen zum Teil auch nicht die erforderlichen anwendungstechnischen Anforderungen und Materialeigenschaften, die notwendig sind. Die praktischen Anwendungen beschränkten sich daher bislang nur auf Spezialgebiete, wie den Boots- und Flugzeugbau sowie die Herstellung von Windrädern.

Ein weiteres Problem bei der Fertigung derartiger Leichtbau-Sandwichplatten sind die mehrstufigen Fertigungsverfahren, die kontinuierlich oder diskontinuierlich ablaufen und aufgrund der komplexen Verfahren zu hohem Aufwand und hohen Herstellungskosten führen.

Ein aus dem Stand der Technik bekanntes Verfahren zur Herstellung von Leichtbau-Sandwichplatten ist beispielsweise in der WO 2008/071618 A2 beschrieben: Hiernach wird in einem ersten Schritt eine Decklagenschicht aus Spänen durch Verpressen und Erhitzen erzeugt, die dann mittels einer Trennvorrichtung, wie ein Keil oder ein horizontal laufendes Bandsägeblatt, in 2 Decklagen aufgeteilt wird, um dann ein schäumbares Zwischenschichtmaterial einzubringen, das dann verschäumt wird und die fertige Sandwichplatte ausbildet.

Bekanntermaßen verwenden auch andere Dokumente aus dem Stand der Technik zur Herstellung von Leichtbau-Sandwichplatten solche Trennvorrichtungen zur Trennung der gebildeten Deckschichten. Beispielhaft sei hierzu auf die US 2010/0 133 713 A1 verwiesen, die ein "Dampfschwert" zur horizontalen Aufteilung der Deckplatte einsetzt, oder auch die EP 1 469 140 A1, die als Trennvorrichtung ebenfalls einen Keil verwendet.

Weiterhin ist aus der US 2003/0 165 669 A1 ein Verfahren zur Herstellung einer Faserplatte mittlerer Dichte bekannt, bei dem eine Versiegelungszusammensetzung eingesetzt wird, die auf eine oder beide Seiten einer Fasermatte vor dem Pressen aufgebracht wird, um deren Oberflächen hinsichtlich Dichte und Festigkeit zu verbessern. Die Versiegelungszusammensetzung enthält zumindest ein Trennmittel, Bindemittel oder Weichmacher sowie gegebenenfalls ein oder mehrere Hilfsstoffe und gegebenenfalls einen Träger, wie Wasser. Als Trennmittel werden chemische Verbindungen mit polarem und öligem bzw. unpolarem Ende verwendet, wie Tenside. Das Trennmittel wird hier aufgrund der im Molekül vorliegenden unterschiedlichen Polaritäten zum Ablösen von unterschiedlichen Oberflächen, d.h. dem Metall der Presse vom Holz der Platte, eingesetzt. Die hergestellte Platte wird jedoch nicht aufgetrennt; das Trennmittel dient ausschließlich zum Ablösen der Holzplatte von der Metallpresse. Demnach soll das Trennmittel auf der Oberfläche der Platte vorliegen und nicht ins Innere diffundieren, um seine Wirkung zu erzielen. Wenn eine Diffusion der Versiegelungszusammensetzung stattfinden würde, dann nur um die Oberfläche oder oberflächennahe Bereiche zu versiegeln. Es kann durch Verwendung dieser Versiegelungszusammensetzung keine kontrollierte Spaltung einer Holzplatte in 2 Platten erfolgen.

Ferner offenbart die DE 10 2005 061 922 A1, dass beim üblichen Prozess der Plattenherstellung vor dem Verpressen der Platten in das Span- bzw. Faservlies parallel zur Plattenebene mindestens ein der Oberfläche der Platten entsprechendes Trennmittel schichtförmig eingebracht wird, so dass im Ergebnis des Plattenbildungsprozesses eine mehrlagige Platte entsteht, die nach Trennung der Plattenschichten mehrere separate Platten vorzugsweise unterschiedlicher Dicke ergibt. Hierzu wird die Platte vorverdichtet, dann wird diese mechanisch, beispielsweise mit einem messerartigen Werkzeug aufgetrennt, eine Trennmittelschicht eingebracht und dann ein Heisspressvorgang zum Erhalt mehrerer Platten durchgeführt, die dann wieder mechanisch, beispielsweise mit einem Dampfschwert, getrennt werden. Das eingesetzte Trennmittel wird als Schicht vorgesehen, kann mehrschichtig sein, ist nach dem Pressen vollständig oder anteilig noch vorhanden und kann wiederverwendet werden. Durch das Trennmittel erfolgt eine physikalische und optische Modifizierung der Plattenseite, wobei sich das Trennmittel mit der Platte verbindet, um eine dekorative, glatte Oberfläche zu erzeugen. Als bevorzugtes Trennmittel wird ein Siliconspray beschrieben. Silicone oder Poly(organo)siloxane sind wasser- und ölunlöslich Polymere, die nicht zu den Tensiden gehören und üblicherweise als Entschäumerformulierungen Verwendung finden. Ein derartiges Siliconspray könnte in der vorliegenden Erfindung nicht als Spalthilfe dienen, da dieses die weitere Verarbeitung in Form des Einbringens der Schaum-Zwischenschicht als Entschäumer verhindert. Aufgrund der Entschäumungswirkung des Silikonsprays würde der Schaum sich nicht ausbilden können und zudem würde die Haftung des Schaums zwischen den Deckschichten hierdurch deutlich verringert werden, so dass eine Leichtbau-Sandwichplatte nicht herstellbar wäre.

Einen völlig anderen Lösungsansatz schlägt die DE 10 2012 020 145 B3 vor, die keine mechanische Trennvorrichtung zum Auftrennen der Holzspanplatte verwendet, sondern die Trennung der Deckschichten durch Auswahl geeigneter Prozessbedingungen durchführt. Die Offenbarung der DE 10 2012 020 145 B3 soll hier durch Bezugnahme in ihrer Gesamtheit in die vorliegende Offenbarung mit einbezogen werden.

So beschreibt die DE 10 2012 020 145 B3 gemäß der Lehre des Anspruchs 1 ein kontinuierliches Verfahren zur Herstellung von Leichtbau-Sandwichplatten mit:
einer unteren Deckschicht
   und
einer oberen Deckschicht,
die beide aus dicht gepackten und fest miteinander verklebten Holzspänen bestehen und eine glatte Außenfläche, sowie eine raue, dampfdurchlässige Innenfläche aufweisen
sowie
einer Zwischenschicht, die einen Kunstharzhartschaum umfasst, die zwischen der unteren und der oberen Deckschicht angeordnet und damit fest verbunden ist, umfassend mindestens folgende Schritte:
   1) Bereitstellen einer geschichteten Lage, die mindestens eine gestreute untere Decklage und eine darüber gestreute obere Decklage, beide aus beleimten Holzspänen, aufweisen;
   2) Verpressen dieser Lage zwischen beheizten Pressflächen mit einem Pressdruck von bis zu 30 bar und einer Temperatur der Pressflächen von 130 bis 250°C zu einer Holzspanplatte;
   3) Auseinanderführen der Pressflächen und dadurch Druckentlastung der Holzspanplatte, wodurch die Holzspanplatte infolge des in ihrer Kernzone aufgebauten Dampfdrucks mittig aufreißt und sich in zwei gleich starke Deckschichten mit jeweils einer glatten Außen- und einer rauen Innenfläche teilt;
   4) Auseinanderführen der Deckschichten, so dass die Zwischenschicht zwischen diesen eingebracht werden kann;
   5) Sprühen eines zu Polyurethanhartschaum aufschäum- und aushärtbaren Polyurethansystems mit mindestens folgenden Komponenten:
      a) Isocyanat und/oder Polyisocyant(e);
      b) mindestens ein Polyol und
      c) ein oder mehrere verdampfbare(s) Treibmittel auf die Innenfläche(n) der unteren Deckschicht oder beider Deckschichten;
   6) Aufschäumen und Kondensieren des Polyurethansystems, bis die Polyurethanschaumschicht(en) zähflüssig bis plastisch verformbar, aber noch verpressbar ist/sind;
   7) Rückführung der oberen und/oder unteren Deckschicht, so dass ihr Abstand, wenn eine Leichtbau-Sandwichplatte gefertigt werden soll, bei der beide Deckschichten eine glatte Außenfläche aufweisen, gleich der Solldicke oder, wenn eine Leichtbau-Sandwichplatte gefertigt werden soll, bei der eine oder beide Deckschichten eine durch Feinschleifen mattierte Außenfläche aufweisen, 0,1 bis 0,3 mm größer ist als die Solldicke der Leichtbau-Sandwichplatte;
   8) Stabilisieren der nach 7) kalibrierten Leichtbau-Sandwichplatte, indem man sie zwischen in dem in 7) definierten Abstand parallel verlaufenden Pressflächen führt, bis die Zwischenschicht zu Polyurethanhartschaum ausreagiert hat;
   9) Konfektionieren (Ablängen) und Versäubern der Kanten der als Endlosband gefertigten Leichtbau-Sandwichplatte zu Platten mit handelsüblichen Abmessungen, und
   10) gegebenenfalls Mattieren der Außenfläche(n) einer oder beider Deckschichten durch Feinschleifen bis zur Solldicke der Leichtbau-Sandwichplatte;
   wobei
   a) im Schritt 1) zwischen die Decklagen keine Zwischenlage gestreut wird;
   b) die Temperatur der Pressflächen und die Dauer des Pressvorgangs so gewählt werden, dass sich im Bereich der Innenflächen der Deckschichten ein hoher Dampfdruck aufbaut, der bei der durch das Auseinanderführen der Pressflächen im Schritt 3) bewirkten Druckentlastung die in Schritt 2) erzeugte Holzspanplatte mittig aufreißt und in zwei gleich starke Deckschichten aus dicht gepackten, fest miteinander verklebten Holzspänen mit glatten Außenflächen und rauen Innenflächen trennt;
   c) die Deckschichten beim Verlassen der Presse mittels Walzen und/oder Transportbändern auseinander geführt werden, so dass der Abstand ihrer Innenflächen groß genug wird, um die Sprüh- oder Einbringungsvorrichtung für das Sprühen oder sonstige Einbringen des Polyurethansystems gemäß Schritt 5) zwischen den Deckschichten platzieren zu können;
   d) die Wärme, die beim Verpressen der Deckschichten in diese eingebracht wurde, genutzt wird, um den Reaktionsprozess des Polyurethansystems zu beschleunigen.

Demnach beschreibt die DE 20 2012 020 145 B3 ein kontinuierliches Verfahren zur Herstellung von Leichtbau-Sandwichplatten, basierend auf Holzfasern jeglicher Art als Deckschicht und einer Polyurethanschicht als Zwischenschicht. Ein wesentlicher Bestandteil des Verfahrens ist das kontrollierte Auseinanderreißen der gefertigten Platte mit Hilfe von überschüssigem Wasserdampf. Hierdurch entfallen die bei der Plattenfertigung bislang auftretenden Probleme bei der Steuerung der Herstellgeschwindigkeit, Feuchtekontrolle, Kerntemperatur etc., um den Dampfdruck des Wassers während der Herstellung unter Kontrolle zu halten, da der Wasserdampfdruck gezielt zur Aufspaltung der Platte eingesetzt wird.

Gemäß einer Ausführungsform wird in der DE 10 2012 020 145 B3 für die kontrollierte Spaltung die Verwendung einer zusätzlichen leimfreien Zwischen- oder Mittelschicht vorgesehen, die als Teil der Mittelschicht in die Platte eingestreut wird und nach der Trennung zumeist wieder entfernt werden muss. Alternativ wäre es möglich, eine reduzierte Beleimung der Zwischenschicht vorzunehmen, die zwar zu einer vereinfachten Spaltung beitragen, jedoch gleichzeitig zu einer Schwächung der Haftkräfte in der Mittelzone der Platte führen würde, wodurch sich die Qualität der Platte jedoch deutlich verschlechtern würde. Tatsächlich würde eine derartige Verringerung des Leimanteils insgesamt zu einer deutlichen Verschlechterung der physikalischen und mechanischen Eigenschaften der hergestellten Platte führen, wodurch die geforderten Werte und Eigenschaftsprofile dann nicht mehr erreicht werden könnten.

Die DE 10 2012 020 145 B3 offenbart ein Verfahren der eingangs genannten Art. In einer Ausführungsform kann eine Spalthilfe zugefügt werden, und dies kann eine Zwischenschicht aus leimfreien Holzschnitzeln sein.

Die WO 2008/071618 A2 offenbart ein Verfahren zum Herstellen einer Sandwichplatte mit den Schritten a) Bereitstellen einer oberen Decklage, b) Bereitstellen einer unteren Decklage, c) Bereitstellen einer zwischen der oberen und unteren Decklage angeordneten Zwischenlage, d) Verdichten der oberen und unteren Decklage, e) Aufschäumen der Zwischenlage.

Die DE 10 2005 061 922 A1 offenbart ein Verfahren zur Herstellung trennbarer Plattenwerkstoffe, bei dem ein Span- bzw. Faservlies mittels Wärme und Druck zu einer festen Platte verdichtet wird, dass das Vlies parallel zur Plattenebene mindestens einmal aufgetrennt wird, anschließend in die erzeugte Trennfuge ein Trennmittel (z.B. Silikon) eingebracht wird, das Vlies mit der eingebrachten Trennmittelschicht einem Heißpressvorgang unterzogen wird und abschließend bei Bedarf die entstandenen separaten Platten mechanisch getrennt werden.

Der vorliegenden Erfindung liegt somit die Aufgabe zugrunde, die Nachteile aus dem Stand der Technik zu überwinden. Insbesondere soll ein kostengünstiges und kontinuierliches Verfahren zur Herstellung von Leichtbau-Sandwichplatten, bevorzugt auch hochwertigen Leichtbau-Sandwichplatten, bereitgestellt werden, wobei insbesondere die Nachteile der DE 10 2012 020 145 B3 vermieden werden sollen.

Erfindungsgemäß wird diese Aufgabe durch ein kontinuierliches Verfahren zum Herstellen einer Leichtbau-Sandwichplatte gelöst, umfassend eine untere und eine obere Deckschicht, jeweils aus verpressten und miteinander verklebten Holzspänen, sowie eine zwischen den beiden Deckschichten angeordnete und damit fest verbundene Zwischenschicht, die Hartschaum aufweist, umfassend die nachfolgenden Schritte:
1) Bereitstellen einer unteren und oberen Decklage aus gestreuten, beleimten Holzspänen;
2) Verpressen der erhaltenen oberen und unteren Decklage unter Anwendung von Druck und Temperatur zu einer Holzspanplatte;
3) Druckentlastung der Holzspanplatte, wodurch die Holzspanplatte infolge des in ihrer Kernzone aufgebauten Dampfdrucks aufreißt und sich in eine obere und untere Deckschicht trennt;
4) Auseinanderführen der oberen und unteren Deckschichten, so dass eine Zwischenschicht eingebracht werden kann,
5) Einbringen von zu Hartschaum aufschäum- und aushärtbaren Polymeren zwischen die obere und untere Deckschicht;
6) Aufschäumen der Polymeren, bis diese zähflüssig bis plastisch verformbar, aber noch verpressbar sind;
7) Zusammenführen der Deckschichten auf die Solldicke der herzustellenden Leichtbau-Sandwichplatte und Halten der Dicke bis die Zwischenschicht ausreagiert hat unter Erhalt der Leichtbau-Sandwichplatte,
wobei
vor dem Verpressen von Schritt 2), und vor Durchführen von Schritt 3), eine flüssige Spalthilfe zu einer oder beiden Decklagen und/oder zu einer oder beiden Deckschichten der Holzspanplatte zugegeben wird oder auf eine oder beide Decklagen und/oder auf eine oder beide Deckschichten der Holzspanplatte aufgebracht wird, wobei die flüssige Spalthilfe eine wässerige Lösung oder wässerige Dispersion darstellt, und die Spalthilfe ausgewählt wird aus einer Gruppe, bestehend aus ein oder mehreren Tensiden, oder einer Gruppe, bestehend aus ein oder mehreren Säuren.

Durch das Verfahren der vorliegenden Erfindung gelingt es, die Spaltung der zunächst hergestellten Holzspanplatte zu vereinfachen und diese zu erleichtern, ohne dass die Zusammensetzung der Holzspanplatte nachteilig verändert werden würde. Zur Erleichterung des Spaltvorgangs ist es nicht erforderlich, die Beleimung zu verändern bzw. zu vermindern, so dass ein optimales Verhältnis von Leim zu Holzfaser beibehalten werden kann. Eine Verringerung des Leimanteils oder eine reduzierte Beleimung der Zwischenschicht, würde demgegenüber zu einer Schwächung der Haftkräfte in der Mittelzone der Platte und damit insgesamt einer Verschlechterung der Eigenschaften der gefertigten Platte führen. Der Leimanteil der Platte kann daher im gewünschten Bereich beibehalten bleiben, so dass trotz eines erleichterten Trennvorgangs für die Deckschichten Leichtbau-Sandwichplatten mit nach wie vor guten bis sehr guten Eigenschaften erhalten werden können.

Das erfindungsgemäße Verfahren gemäß bevorzugter Ausführungsformen wird nachfolgend in größeren Einzelheiten beschrieben, ohne die Erfindung hierauf zu beschränken:
Zunächst wird in bekannter Verfahrensweise eine herkömmliche Holzspanplatte, beispielsweise unter Verwendung einer Doppelbandpresse, hergestellt. Die Holzspanplatte weist gemäß einer Ausführungsform zwei Deckschichten aus beleimten Holzspänen, aber keine Zwischenschicht auf. Die beiden Deckschichten werden daher zunächst in einer zusammenhängenden Schicht in Form einer Holzspanplatte gemeinsam bereitgestellt und auch gemeinsam verpresst. Anschließend wird die Holzspanplatte dann in einer Ebene in Längsrichtung der Schicht aufgetrennt, um die Schaum-Zwischenschicht einzubringen. Um die Schaum-Zwischenschicht einbringen zu können, wird die Holzspanplatte daher in eine obere und untere Deckschicht getrennt. Hierzu wird kein Werkzeug verwendet, sondern der Dampfdruck, der im Inneren der Holzspanplatte beim Verpressen und Erwärmen entsteht, verwendet. Dieser Dampfdruck wird nicht durch Abkühlen vor dem Verlassen der Presse verringert, sondern vielmehr gezielt eingesetzt, um die beiden Deckschichten auseinander zu reißen. Um dieses Trennen der beiden Deckschichten zu erleichtern, wurde nun festgestellt, dass eine flüssige Spalthilfe in vorteilhafter Weise eingesetzt werden kann.

Unter "Spalthilfe" wird im Rahmen der vorliegenden Erfindung eine Verbindung verstanden, welche zur Unterstützung des Aufreißens der Holzspanplatte in Schritt 3) dient, um hierdurch das Trennen in die obere Deckschicht und die untere Deckschicht zu erleichtern. Dies vereinfacht das vorliegende Verfahren deutlich, da die beiden Deckschichten in einfacherer Weise erzeugt werden können und hierdurch ein geringerer Kraftaufwand erforderlich wird, um beide Schichten voneinander zu trennen. Dadurch können die Bedingungen zum Aufbau des Dampfdrucks in der Kernzone der Holzspanplatte, der zu einem Aufreißen führt, insgesamt gemäßigter eingestellt werden als beispielsweise in der DE 10 2012 020 145 B3 erforderlich. Hieraus resultiert ein gleichmäßiges Ergebnis und ein noch gezielteres Vorgehen beim Auftrennen der Holzspanplatte in zwei Deckschichten.

Die Spalthilfe wird im vorliegenden Verfahren in flüssiger Form eingesetzt, da diese hierdurch in einfacher Weise auf oder in die Holzspanplatte auf- bzw. eingebracht werden kann. Hierdurch unterscheidet sich die Spalthilfe grundsätzlich von Ansätzen aus dem Stand der Technik, wie beispielsweise der DE 10 2012 020 145 B3, wo Streuschichten zur gezielten Spaltung eingesetzt werden können. Jedoch handelt es sich bei diesen Streuschichten eigentlich nicht um eine Spalthilfe wie diese erfindungsgemäß vorgesehen ist, sondern eher um eine Art Sollbruch-Stelle, die ein Auftrennen an einer bestimmten Stelle in der Holzspanplatte durch bewusste Schwächung einer Ebene in der Kernzone der Platte ermöglicht.

Im vorliegenden Verfahren wird die Spalthilfe in Form einer wässerigen Lösung oder wässerigen Dispersion verwendet. Der Begriff "flüssige Spalthilfe" bedeutet, dass die Spalthilfe in flüssiger Form vorliegt, d.h. sich entweder in gelöster oder dispergierter Form in einem Lösungs- oder Dispergiermittel befindet. Es wird ein wässeriges Lösungsmittel oder ein wässeriges Dispergiermittel verwendet, so dass zumindest der Hauptanteil des Lösungs- oder Dispergiermittels Wasser darstellt. Besonders bevorzugt besteht das Lösungs- oder Dispergiermittel vollständig aus Wasser.

Zahlreiche Versuche zeigten, dass herkömmliche Trennmittel, wie diese auf dem Markt angeboten werden, als Spalthilfen nicht geeignet sind oder nur wenig befriedigende Ergebnisse erzielen. So zeigen bekannte externe Trennmittel, die beispielsweise für das Ablösen von polymeren Methylendiisocyanat-(pMDI)-gebundenen Faserplatten von der Pressenoberfläche eine gute Wirkung zeigen, keinerlei Trennwirkung innerhalb der Platte, um die beiden Deckschichten in gewünschter Weise aufzuspalten. Entsprechende Versuche mit wachsbasierten Trennmitteln oder anderen im Markt gängigen Trennmitteln, konnten keine Spaltung der Platte oder nur unter erhöhtem Kraftaufwand eine Spaltung ermöglichen. Bekannte Trennmittel sind darauf ausgelegt, eine leichtere Ablösung bzw. Trennung von voneinander völlig unterschiedlichen Materialien, wie einer Holzspanplatte von der Metalloberfläche einer Presse, zu ermöglichen und zu erleichtern. Um diese unterschiedlichen Oberflächen (Metall/Holz) voneinander zu trennen, haben die bekannten Trennmittel hierauf abgestimmte, sehr spezielle Eigenschaften. Es ist daher zu erwarten, dass diese Trennmittel für die Trennung von gleich beschaffenen Oberflächen (Holz/Holz), d.h. die Holzspanplatte an sich aufzutrennen, nicht geeignet sind.

In überraschender Weise wurde jedoch gefunden, dass oberflächenaktive Verbindungen in wässeriger Lösung oder wässeriger Dispersion die notwendige Schwächung des in der Holzspanplatte vorliegenden Bindemittels erzeugen, so dass eine leichtere Spaltung der erzeugten Holzspanplatte in der Mitte der verpressten Platte möglich wird. Ebenso wurde gefunden, dass Säuren in wässerigen Lösungen oder wässerigen Dispersionen eine Spaltung der Holzspanplatte mit geringem Kraftaufwand ermöglichen.

Die flüssige Spalthilfe wird daher ausgewählt aus einer wässerigen Lösung oder wässerige Dispersion von einem oder mehreren Tensiden oder einer wässerigen Lösung oder wässerige Dispersion von einer oder mehreren Säuren. Es versteht sich von selbst, dass die Art der eingesetzten Tenside und Säuren sowie deren Konzentration in wässeriger Lösung oder wässeriger Dispersion derart ausgewählt werden, dass die zu trennenden Deckschichten nicht angegriffen oder gar deren Oberfläche zerstört werden. Die im Einzelfall eingesetzten wässerigen Lösungen oder wässerigen Dispersionen, die jeweils verwendeten Tenside oder Säuren und deren erforderliche Konzentrationen kann der Fachmann ohne weiteres durch eine Reihe an Versuchen bestimmen und auswählen.

Unter den Begriffen "oberflächenaktive Verbindungen" oder "Tenside", die hier austauschbar verwendet werden, sollen im Rahmen der vorliegenden Erfindung Substanzen verstanden werden, welche die Oberflächenspannung einer Flüssigkeit herabsetzen oder die Grenzflächenspannung zwischen 2 Phasen verringern. Es handelt sich um amphiphile Substanzen, die aus einem hydrophoben und einem hydrophilen Teil aufgebaut sind.

Eine flüssige Spalthilfe, die im erfindungsgemäßen Verfahren eingesetzt wird, ist daher bevorzugt eine wässerige Lösung oder eine wässerige Dispersion von einem oder mehreren Tensiden. Tenside, die eingesetzt werden können, sind anionische, kationische oder nichtionische Tenside. Das oder die Tenside werden in wässeriger Lösung oder wässeriger Dispersion eingesetzt; es kann auch eine Mischung von anionischen Tensiden, kationischen und/oder nichtionischen Tensiden in wässeriger Lösung oder wässeriger Dispersion zum Einsatz kommen.

Unter "anionischen Tensiden" werden oberflächenaktive Verbindungen verstanden, die eine negative Gruppe tragen. Diese sind üblicherweise aus einem unpolaren Alkylrest und einer polaren Gruppen, wie Carboxylat-, Sulfonat-, Sulfat- oder Phosphat-Gruppe oder auch andere polare Gruppen aufgebaut. Anionische Tenside sind daher bevorzugt solche Tenside, die eine Carboxylat-, Sulfonat-, Sulfat- oder Phosphat-Gruppe oder andere polare Gruppe aufweisen. Bevorzugte anionische Tenside, die als Spalthilfe eingesetzt werden können, sind daher ausgewählt aus einer Gruppe, bestehend aus Alkylcarboxylaten, Alkylbenzolsulfonaten, sekundären Alkylsulfonaten (= Alkansulfonate), Fettalkoholsulfaten, wie Natriumdodecylsulfat (= Natriumlaurylsulfat), Fettalkoholethersulfaten, bevorzugt Alkylethersulfaten, wie Natriumdodekylpoly(oxyethylen)sulfat, Phosporsäureestern, bevorzugt Alkyl- und Arylphosphaten, Alkylether- und Aryletherphosphaten, insbesondere ethoxylierten Phosphorsäureestern, Tauriden oder Succinaten, wie Bernsteinsäuresalze oder Bernsteinsäureester, bevorzugt Sulfosuccinaten, beispielsweise Natriumlaurylethersulfosuccinat oder Sulfobersteinsäurediisooctylester, oder Mischungen dieser.

Besonders bevorzugte anionische Tenside sind Alkylbenzolsulfonate, sekundäre Alkylsulfonate, Phosporsäureester, insbesondere ethoxylierte Phosphorsäureester, oder Succinate, insbesondere Sulfosuccinate, oder Mischungen dieser. Besonders bevorzugte Phosphorsäureester sind Silaphos-Produkte, d.h. Phosphorsäureester von Fettalkoholen oder Phosphorsäureester von Fettalkoholethoxylaten, jeweils Mono- oder Diester, und deren Salze, oder Phosphetal-Produkte, d.h. Phosphorsäureester von Fettalkoholen, insbesondere C₂-C₁₅-Alkoholen, jeweils Mono- oder Diester, und deren Salze.

"Kationische Tenside" bezeichnen Tenside, die eine positiv geladene funktionelle Gruppe, aber keine zusätzlich negativ geladene Gruppe aufweisen. Auch kationische Tenside sind aus einem unpolaren Alkylrest und einer polaren Gruppe aufgebaut. Die polare Gruppe ist in der Regel eine quartäre Ammonium-Gruppe. Besonders bevorzugt sind quartäre Ammonium-Verbindungen, insbesondere Tetraalkylammonium-Verbindungen.

Als "nichtionische Tenside" werden oberflächenaktive Substanzen verstanden, die in wässeriger Lösung oder Dispersion keine Ionen bilden. Diese haben einen polaren und einen unpolaren Teil, jedoch keine partielle Ladung und sind damit neutral. Beispielhafte nichtionische Tenside, die als flüssige Spalthilfe oder Dispersion verwendet werden können sind ausgewählt aus einer Gruppe, bestehend aus Fettalkoholalkoxylaten, wie Fettalkoholethoxylaten (= Polyalkylenglykolether), Fettsäurealkoxylaten, wie Fettsäureethoxylaten, Fettsäureesteralkoxylaten, wie Fettsäureesterethoxylaten, Blockpolymeren, wie amphiphile Blockcopolymeren, Fettaminalkoxylaten, wie Fettaminethoxylaten, oder Zuckertensiden, wie Alkylpolyglykosiden, Methylglycosidestern, Ethylglycosidestern, Sorbitanestern, N-Methylglucamid, Saccharoseestern, oder Mischungen dieser.

Besonders bevorzugte nichtionische Tenside sind Fettalkoholalkoxylate und Zuckertenside oder Mischungen dieser.

Nichtionische Tenside haben gegenüber anionischen Tensiden die Vorteile, dass sie hautfreundlicher, nicht toxisch, in der Regel vollständig biologisch abbaubar und aus nachwachsenden Rohstoffen herstellbar sind; jedoch sind diese zum Teil aufgrund der aufwändigeren Herstellung etwas teurer.

Tenside sind dafür bekannt, dass diese üblicherweise als Detergentien, in Waschmitteln, Spülmitteln, Haarwaschmitteln, Emulgatoren, Benetzungs-, Schäum- und Dispergiermittel verwendet werden. Es ist daher völlig unerwartet, dass diese als Spalthilfe eingesetzt werden können. Beispielsweise werden die als anionische Tenside bevorzugt eingesetzten Silaphos-Produkte als Haushalts- und Spezialreiniger von der Fa. Schill & Seilacher vertrieben.

Alternativ zu den Tensiden kann die Spalthilfe auch aus einer Säure ausgewählt werden. Hierfür kommt jede Säure in Frage, die dem Fachmann bekannt ist. Dies sind beispielsweise anorganische Säuren oder auch organische Säuren, d.h. Carbonsäuren. Als anorganische Säuren können beispielhaft genannt werden: Schwefelsäure, Salzsäure, Phosphorsäure oder Salpetersäure. Besonders bevorzugt ist Salzsäure.

Organische Säuren können aus der Gruppe, bestehend aus Ameisensäure, Essigsäure, Zitronensäure, Weinsäure oder Milchsäure, ausgewählt werden, besonders bevorzugt ist Essigsäure.

Die Säuren werden ebenfalls in wässeriger Lösung oder wässeriger Dispersion als Spalthilfe eingesetzt.

Die flüssige Spalthilfe stellt kein "internes" Trennmittel, wie im Stand der Technik verwendet, dar. Es ist daher nicht erwünscht, dass die flüssige Spalthilfe dem Bindemittel zum Beleimen zugesetzt und dann in die Holzspäne eingemischt und eingearbeitet wird. Es ist auch nicht im Sinne der vorliegenden Erfindung, wenn die flüssige Spalthilfe in Form einer Trennlage und/oder-schicht in die Holzspanplatte oder eine Vorstufe hiervon eingebracht wird. Ein derartiges Vorgehen würde zu einer Verschlechterung der Qualität der erzeugten Holzspanplatte und zur Schwächung im Verbund führen, da ein lokal begrenztes Vorsehen einer derartigen Trennlage oder -schicht die Gesamtbeschaffenheit der Holzspanplatte verändern würde. Auch würden an die Trennlage oder -schicht unmittelbar angrenzende Bereiche von dieser Qualitätsminderung erfasst werden, so dass insgesamt deutlich schlechtere physikalische und mechanische Eigenschaften der hergestellten Platte resultieren würden. Dies ist nicht erwünscht.

Die flüssige Spalthilfe gemäß der vorliegenden Erfindung ist demgegenüber eine "äußere" Trennhilfe, die nicht in Form einer Schicht oder Lage eingesetzt wird, sondern verteilt auf und/oder in den Deckschichten der Holzspanplatte oder deren Vorstufe, der Decklagen, vorliegt und die Auftrennung der Holzspanplatte in zwei Teile signifikant unterstützt.

Die flüssige Spalthilfe kann vor und/oder während und/oder unmittelbar nach dem Pressen aufgebracht werden. Dies kann mit jedem dem Fachmann bekannten Verfahren erfolgen, beispielsweise durch Sprühen, Gießen oder in anderer Weise. Die flüssige Spalthilfe kann vor dem Pressen auf eine oder beide Decklagen oder einen Teil der oberen und/oder unteren Decklage aufgebracht werden. Da die Decklage auch aus mehreren Lagen aufgebaut sein kann, wird die Spalthilfe dann beispielweise nur auf eine der Lagen aufgebracht. Es besteht auch die Möglichkeit, einen Teil des Materials einer Decklage, beispielsweise einen Teil der Holzspäne der unteren und/oder oberen Decklage, mit der flüssigen Spalthilfe zu tränken und dann erst die jeweilige Lage(n) aufzustreuen.

Bevorzugt wird die flüssige Spalthilfe derart auf die eine oder beide Decklagen und/oder auf eine oder beide Deckschichten der Holzspanplatte aufgebracht, dass diese teilweise oder vollständig mit flüssiger Spalthilfe befeuchtet oder teilweise oder vollständig mit flüssiger Spalthilfe getränkt werden.

Unter "Decklage" wird eine Vorstufe der Holzspanplatte verstanden, in der die gestreuten, beleimten Holzspäne vorliegen, die je nach Beschaffenheit und Beleimung eine lose Schüttung darstellen oder eine mehr oder weniger zusammenhängende dichte Masse bilden.

Unter "Deckschicht" wird eine gepresste Decklage verstanden, die Teil der aufzutrennenden Holzspanplatte ist und auch einen Teil der herzustellenden fertigen Leichtbau-Sandwichplatte darstellt.

Die flüssige Spalthilfe kann auch während des Pressens auf die gesamte Oberfläche der Holzspanplatte aufgebracht werden oder nur lokal auf einen Teil der Oberfläche der Holzspanplatte, beispielsweise auf eine oder beide Seitenkanten, insbesondere im Bereich der Kernzone der Holzspanplatte, wo die Platte aufgetrennt wird, aufgebracht werden. Hierzu kann die Holzspanplatte beispielsweise an einer geeigneten Aufbringvorrichtung, wie einer Sprühvorrichtung, während des Verpressens vorbeigeführt werden, wodurch eine oder beide gegenüberliegenden Seitenkanten der Holzspanplatte mit flüssiger Spalthilfe befeuchtet oder getränkt werden.

Gemäß einer bevorzugten Ausführungsform wird das Verpressen hierbei zwischen beheizten Pressflächen, beispielsweise ausgewählt aus Walzen und/oder Transportbändern, durchgeführt. Der Pressdruck und die Temperatur werden hierfür in geeigneter Weise eingestellt. Beispielsweise kann der Pressdruck bis zu 30 bar betragen. Die Temperatur der Pressflächen kann im Bereich von bevorzugt 130 bis 250°C liegen. Wenn diese beheizten Pressflächen auseinandergeführt werden, resultiert eine Druckentlastung der Holzspanplatte, wodurch die Holzspanplatte infolge des in ihrer Kernzone aufgebauten Dampfdrucks und durch Vorliegen der flüssigen Spalthilfe aufreißt und sich in zwei Deckschichten mit jeweils einer glatten Außen- und einer rauen Innenfläche teilt.

Die Menge an aufgebrachter flüssiger Spalthilfe, die in wässeriger Lösung oder als wässerige Dispersion eingesetzt wird, ist relativ unproblematisch. Die Holzspäne saugen in jedem Fall die wässerige Lösung oder wässerige Dispersion auf, und diese verteilt sich auf der Oberfläche. Die Flüssigkeitsmenge wird bevorzugt derart gewählt, dass die Oberfläche ausreichend vollständig benetzt. Eine Mindestmenge kann der Fachmann ohne weiteres durch einige orientierende Versuche bestimmen. Eine zu hohe Menge an flüssiger Spalthilfe kann nicht aufgebracht werden, da der Wassergehalt des Ausgangsmaterials völlig unkritisch ist: So kann in der Holzspanplatte mehr Wasser vorliegen als dies beim Einsatz von Trennwerkzeugen möglich wäre, wo dies generell unerwünscht ist. Das überschüssige Wasser kann dann nach der Trennung der Deckschichten einfach als Dampf entweichen und kann seitlich abgeführt werden.

Die Verwendung von Wasserdampf im Trennschritt ermöglicht generell, dass eine höhere Kerntemperatur in der Holzspanplatte vorliegen kann als bei Verwendung von Trennwerkzeugen, wodurch der Leim schneller abbindet. Es wird angenommen, dass das flüssige Spaltmittel in Form der wässerigen Lösung oder wässerigen Dispersion beim Trennen ebenfalls verdampft, zusammen mit dem austretenden Wasserdampf abgeführt wird und so die Zusammensetzung der herzustellenden Leichtbau-Sandwichplatte nicht nachteilig beeinflussen kann.

Nach dem Trennen der Deckschichten werden diese auseinandergeführt, um einen Schaum, wie beispielsweise Polyurethanschaum oder Harnstoff-Formaldehyd-Harz-Schaum, als Zwischenschicht einzubringen, dessen Polymerisationsprozess durch die vorhandene Feuchtigkeit und die in den Deckschichten noch enthaltene Wärme wesentlich beschleunigt wird. Der Abstand zwischen den Innenflächen der Deckschichten kann hierzu vorzugsweise um mindestens 20 mm größer sein als die Solldicke der Zwischenschicht. Nachdem der Schaum begonnen hat aufzuschäumen, werden die Deckschichten wieder zusammengeführt, so dass sie mit der nun zwischen ihnen liegenden Schaum-Zwischenschicht eine Platte bilden. Der Schaum füllt beim Aufschäumen alle Vertiefungen in den rauen Innenseiten der Deckschichten aus und bildet ohne zusätzlichen Kleber von selbst eine feste Verbindung mit den Deckschichten aus. Die resultierende Verbundplatte kann dann zum Kalibrieren ihrer Dicke und zum Aushärten der Zwischenlage, in einer entsprechenden Vorrichtung, beispielsweise in einer weiteren Doppelbandpresse oder Form, weitergeführt werden, bis sie formstabil genug ist, um die erhaltene Leichtbau-Sandwichplatte abzukühlen und abzustapeln.

Die Deckschichten der hergestellten Leichtbau-Sandwichplatte umfassen oder bestehen neben dem Leimsystem aus Holzspänen, insbesondere wie bei Span- oder OSB-Platten (Grobspanplatten, englisch: oriented strand board bzw. oriented structural board, d.h. Platte aus ausgerichteten Spänen), Holzfasern, wie bei MDF-Platten (mitteldichte Faserplatte) oder HDF-Platte (hochdichte Faserplatte), oder anderen nachwachsenden organischen Stoffen, wie z.B. Rinde, Gräser, Stroh, Naturfasern oder dergleichen.

Es versteht sich, dass die obere und untere Deckschicht jeweils aus ein oder mehreren Schichten aufgebaut sein können. Dies hängt von der geplanten Anwendung und dem gewünschten Einsatzzweck im Einzelfall ab.

Als Leimsystem oder Leim der oberen oder unteren Deckschichten kann jeder dem Fachmann bekannte Leim, der zur Herstellung von herkömmlichen Holzspanplatten benutzt werden kann, zum Einsatz kommen. Der Leim dient dazu, den Verbund der Holzspäne bereitzustellen, und so die mechanischen Eigenschaften der Schicht einzustellen, wie beispielsweise das Quellverhalten, die Beschichtungseigenschaften, die Elastizität, das Ausgasungsverhalten und dergleichen. Leimsysteme sind in der Regel Kondensationsharze, wie beispielsweise Harnstoffharze, Harnstoff-Formaldehyd-Harze, Melamin-Formaldehyd-Harze, Phenol-Formaldehyd-Harze, Isocyanate oder Mischungen dieser, die in der Holzwerkstoffindustrie üblich sind. Bevorzugt ist ein Leimsystem, das mit steigender Temperatur schneller abbindet. Für die obere und untere Deckschicht können unterschiedliche oder gleiche Beleimungen zum Einsatz kommen.

Gemäß einer Ausführungsform kann die obere Deckschicht zur unteren Deckschicht gleich odervon dieserverschieden sein. Für spezielle Anwendungen mit unterschiedlich belasteten Deckschichten kann es zweckmäßig sein, Leichtbau-Sandwichplatten herzustellen, die unterschiedlich dicke Deckschichten aufweisen. Dies kann durch asymmetrisches Trennen beider Deckschichten, beispielsweise durch eine unterschiedliche Temperatur der oberen und unteren Pressflächen in Schritt 2) des Verfahrens und damit entsprechender Wärmeverteilung beim Verpressen erfolgen oder durch einen asymmetrischen Aufbau der Deckschichten erhalten werden.

Auch wenn die Deckschichten unterschiedlich dick sind, so weisen die einzelnen Deckschichten bevorzugt jeweils über ihre gesamte Länge eine gleichmäßige, wenn auch unterschiedliche Dicke auf.

Die obere Deckschicht kann sich auch in anderen Eigenschaften von der unteren Deckschicht unterscheiden. Zum Beispiel kann die obere Deckschicht eine größere oder kleinere Dichte, Dicke, Elastizität und/oder Porengröße als die untere Deckschicht aufweisen. Beispielsweise können unterschiedliche Spangrößen eingesetzt werden, so dass unterschiedliche Dichten der jeweiligen Schichten resultieren.

Die Verwendung der Spalthilfe hat den Vorteil, dass die Lage der Aufreiszone und damit die Lage der Zwischenschicht gesteuert werden kann, so dass diese nicht mehr mittig liegen muss und unterschiedlich dicke Deckschichten erzeugt oder vorgesehen werden können. So wird ein asymmetrischer Aufbau möglich.

Als Schaumsystem kann jeder Schaum, insbesondere Hartschaum, der dem Fachmann bei der Herstellung von Leichtbau-Sandwichplatten bekannt ist oder als geeignet erscheint, zum Einsatz kommen. Dies sind beispielsweise Polyurethane, basierend auf Polyolen, Isocyanaten und Treibmittel, Phenoplaste auf Basis von Phenolharzen, Polyethylene oder Melaminschäume auf Basis der Aminoplaste.

Bevorzugt werden Polyurethan-Schäume eingesetzt, wobei als Treibmittel bevorzugt Wasser verwendet wird.

Die Hartschaum-Zwischenschicht verbindet sich fest mit den Deckschichten, insbesondere auch mit der oberen und unteren Übergangszone zwischen Hartschaum-Zwischenschicht und der unteren und oberen Deckschicht. Dadurch können zusätzliche Materialien, die vor dem Aufschäumen in die Zwischenschicht eingebracht werden können, fest eingebunden werden. Dies sind beispielsweise Glasfasern, Kohlefasern oder Holzfasern, um die Stabilität zu erhöhen, Siliziumoxid oder Bleisulfat, um Schall oder Strahlung zu absorbieren, Schaumpartikel aus Kunststoffen, beispielsweise Polystyrol oder auch andere Schäume, wie organische Schäume aus Mais- oder Weizenstärke.

Die hergestellten Leichtbau-Sandwichplatten sind bevorzugt aus zwei Deckschichten und einer dazwischen liegenden Hartschaumschicht aufgebaut, die mit den rauen Innenseiten der Deckschichten eine Übergangszone ausbildet und deren Unebenheiten ausfüllt. Die Übergangszone weist eine Stabilität auf, die bevorzugt mindestens der Stabilität der Zwischenschicht entspricht. Die Hartschaumschicht-Zwischenschicht weist bevorzugt eine Dichte von 20 bis 80 g/dm³ auf. Bei einem Gewicht der Deckschicht von 600 bis 750 g/dm³ ergibt sich ein Gewicht der Leichtbau-Sandwichplatte von etwa 100 bis 400 g/dm³. Durch Einbringen anderer Materialien in die Zwischenschicht können sich die Dichten natürlich entsprechend ändern.

Gemäß einer weiteren bevorzugten Ausführungsform wird das Verfahren der Erfindung wie im Verfahren gemäß der DE 10 2012 020 145 B3 durchgeführt, wobei in Schritt 3) zusätzlich eine flüssige Spalthilfe verwendet wird. Gemäß dieser Ausführungsform umfasst das kontinuierliche Verfahren zur Herstellung einer Leichtbau-Sandwichplatte eine untere Deckschicht und eine obere Deckschicht, die beide aus dicht gepackten und fest miteinander verklebten Holzspänen bestehen und eine glatte Außenfläche, sowie eine raue, dampfdurchlässige Innenfläche aufweisen sowie eine Zwischenschicht, die einen Kunstharzhartschaum umfasst, die zwischen der unteren und der oberen Deckschicht angeordnet und damit fest verbunden ist, umfassend mindestens folgende Schritte:
1) Bereitstellen einer geschichteten Lage, die mindestens eine gestreute untere Decklage und mindestens einer darüber gestreuten oberen Decklage, beide aus beleimten Holzspänen, aufweist;
2) Verpressen dieser Lage zwischen beheizten Pressflächen mit einem Pressdruck von bis zu 30 bar und einer Temperatur der Pressflächen von 130 bis 250°C zu einer Holzspanplatte;
3) Auseinanderführen der Pressflächen und dadurch Druckentlastung der Holzspanplatte wodurch die Holzspanplatte infolge des in ihrer Kernzone aufgebauten Dampfdrucks aufreißt und sich in zwei Deckschichten mit jeweils einer glatten Außen- und einer rauen Innenfläche teilt;
4) Auseinanderführen der Deckschichten, so dass die Zwischenschicht zwischen diesen eingebracht werden kann;
5) Sprühen von zu Hartschaum aufschäum- und aushärtbaren Polymeren, bevorzugt eines Polyurethanhartschaumsystems mit mindestens folgenden Komponenten:
   a) Isocyanat und/oder Polyisocyant(e);
   b) mindestens ein Polyol und
   c) ein oder mehrere verdampfbare(s) Treibmittel,
   auf die Innenfläche(n) der unteren Deckschicht oder beider Deckschichten;
6) Aufschäumen und Kondensieren der Polymeren, bis die Polymerhartschaumschicht(en) zähflüssig bis plastisch verformbar, aber noch verpressbar ist/sind;
7) Rückführen der oberen und/oder unteren Deckschicht, so dass ihr Abstand, wenn eine Leichtbau-Sandwichplatte gefertigt werden soll, bei der beide Deckschichten eine glatte Außenfläche aufweisen, gleich der Solldicke oder, wenn eine Leichtbau-Sandwichplatte gefertigt werden soll, bei der eine oder beide Deckschichten eine durch Feinschleifen mattierte Außenfläche aufweisen, 0,1 bis 0,3 mm größer ist als die Solldicke der Leichtbau-Sandwichplatte;
8) Stabilisieren der nach 7) kalibrierten Leichtbau-Sandwichplatte, indem man sie zwischen in dem in 7) definierten Abstand parallel verlaufenden Pressflächen führt, bis die Zwischenschicht zu Polymerhartschaum ausreagiert hat;
9) Konfektionieren (Ablängen) und Versäubern der Kanten der als Endlosband gefertigten Leichtbau-Sandwichplatte zu Platten mit handelsüblichen Abmessungen, und
10) gegebenenfalls Mattieren der Außenfläche(n) einer oder beider Deckschichten durch Feinschleifen bis zur Solldicke der Leichtbau-Sandwichplatte;
wobei
a) im Schritt 1) zwischen die Decklagen keine Zwischenlage gestreut wird;
b) die Temperatur der Pressflächen und die Dauer des Pressvorgangs so gewählt werden, dass sich im Bereich der Innenflächen der Deckschichten ein hoher Dampfdruck aufbaut, der bei der durch das Auseinanderführen der Pressflächen im Schritt 3) bewirkten Druckentlastung die in Schritt 2) erzeugte Holzspanplatte aufreißt und in zwei Deckschichten aus dicht gepackten, fest miteinander verklebten Holzspänen mit glatten Außenflächen und rauen Innenflächen trennt;
c) die Deckschichten beim Verlassen der Presse mittels Walzen und/oder Transportbändern auseinander geführt werden, so dass der Abstand ihrer Innenflächen groß genug wird, um die Sprüh- oder Einbringungsvorrichtung für das Sprühen oder sonstige Einbringen des Polymerhartschaumsystems gemäß Schritt 5) zwischen den Deckschichten platzieren zu können;
d) die Wärme, die beim Verpressen der Deckschichten in diese eingebracht wurde genutzt wird, um den Reaktionsprozess des Polymersystems zu beschleunigen;
wobei vor dem Verpressen von Schritt 2), und vor Durchführen von Schritt 3), eine flüssige Spalthilfe zu einer oder beiden Decklagen und/oder zu einer oder beiden Deckschichten der Holzspanplatte zugegeben wird oder auf eine oder beide Decklagen und/oder auf eine oder beide Deckschichten der Holzspanplatte aufgebracht wird, wobei die flüssige Spalthilfe eine wässerige Lösung oder wässerige Dispersion darstellt, und die Spalthilfe ausgewählt wird aus einer Gruppe, bestehend aus ein oder mehreren Tensiden, oder einer Gruppe, bestehend aus ein oder mehreren Säuren.

Das Verfahren der vorliegenden Erfindung wird nachfolgend anhand der Figuren gemäß einer bevorzugten Ausführungsform erläutert, ohne dass die Erfindung hierauf beschränkt sein soll. Es zeigen:
- Fig. 1: eine schematische Darstellung einer bevorzugten Ausführungsform des erfindungsgemäßen Verfahrens zur Herstellung von Leichtbau-Sandwichplatten; und
- Fig. 2: eine schematische Darstellung einer bevorzugten Ausführungsform einer erfindungsgemäß hergestellten Leichtbau-Sandwichplatte.

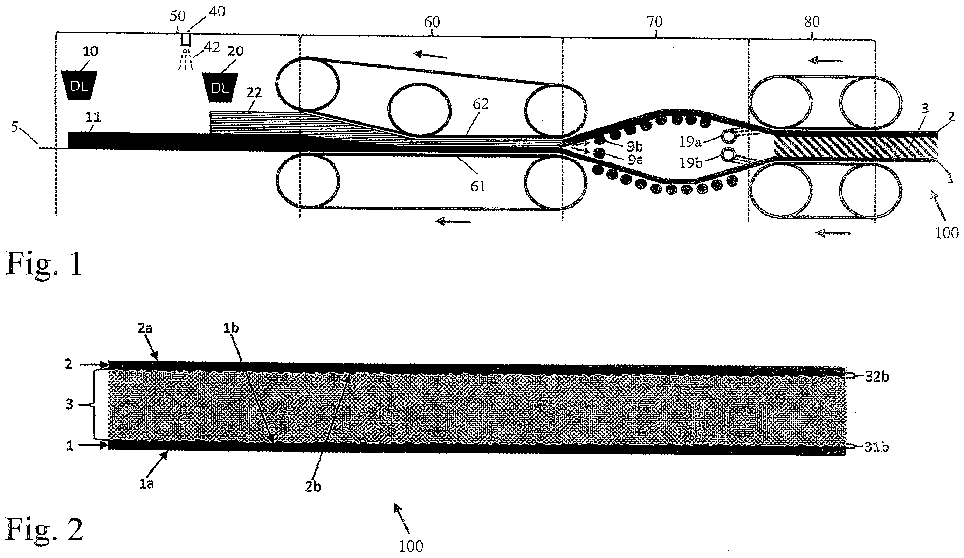

Fig. 1 veranschaulicht in einer schematischen Darstellung eine bevorzugte Ausführungsform des erfindungsgemäßen Verfahrens zur Herstellung von Leichtbau-Sandwichplatten 100. Für das erfindungsgemäße Verfahren können die Vorrichtungen, die zur Herstellung einer herkömmlichen Holzspanplatte bekannt sind, eingesetzt werden.

In der Ausführungsform von Fig. 1 wird zunächst in einer Aufstreuzone 50 mittels einer ersten Streuvorrichtung 10 (DL = Decklage) eine untere Decklage 11 und mittels einer zweiten Streuvorrichtung 20 eine obere Decklage 22 auf ein fortlaufendes Förderband 5 üblicher Bauart aufgestreut. Die obere Decklage 11 und die untere Decklage 22 umfassen jeweils Holzspäne und/oder Holzfasern zusammen mit einem geeigneten Leimsystem. Selbstverständlich können die Decklagen 11, 22 jeweils auch aus mehreren gleichen oder unterschiedlichen Schichten aufgebaut sein, die je nach Anwendung in geeigneter Weise ausgewählt werden.

Im gezeigten Beispielfall sind die obere und die unteren Decklage 11, 22 derart ausgewählt, dass diese sich in der herzustellenden Leichtbau-Sandwichplatte 100 voneinander unterscheiden. So weist die obere Decklage 22 eine kleinere Dichte aber eine größere Dicke auf als die untere Decklage 11. Selbstverständlich sind auch andere Ausführungsformen möglich. Beispielsweise können die beiden Decklagen 11, 22 hinsichtlich Zusammensetzung und Aufbau völlig identisch sein oder beide Decklagen 11, 22 können jeweils in gewünschter Weise variiert werden.

Die aus unterer und oberer Decklage 11, 22 hergestellte Gesamtlage wird nachfolgend in einer Presszone 60 zu einer Holzspanplatte verdichtet, indem diese beispielsweise zwischen Pressplatten unter Anwendung von geeignetem Druck und Temperatur gepresst wird. Gemäß einer bevorzugten Ausführungsform erfolgt das Verpressen zwischen beheizten Pressflächen mit einem Pressdruck von bis zu 30 bar und einer Temperatur der Pressflächen von 130 bis 250°C mit den gezeigten Transportband-Pressen 61 und 62. Andere als die gezeigten Pressvorrichtungen sind ebenfalls möglich.

Durch die verwendeten Materialmengen kann die Zusammensetzung der einzelnen Lagen 11, 22 über die Streuvorrichtungen 10, 20 gesteuert werden, so dass ein symmetrischer Aufbau oder ein asymmetrischer Aufbau der Deckschichten 1, 2 erzielt werden kann.

Zur Erleichterung bzw. Vereinfachung des Auftrennens der gebildeten Holzspanplatte in die untere und obere Deckschicht 1, 2 wird eine flüssige Spalthilfe 42 eingesetzt. Die flüssige Spalthilfe 42 liegt in Form einer wässerigen Lösung oder als wässerige Dispersion vor, wobei die Spalthilfe ausgewählt wird aus einer Gruppe, bestehend aus ein oder mehreren Tensiden oder ein oder mehreren Säuren. Die Tenside sind anionische, kationische oder nichtionische Tenside. Besonders bevorzugte anionische Tenside sind Alkylbenzolsulfonate, sekundäre Alkylsulfonate, ethoxylierte Phosporsäureester oder Succinate, insbesondere Sulfosuccinate, oder Mischungen dieser. Besonders bevorzugte kationische Tenside sind Tetraalkylammonium-Verbindungen. Besonders bevorzugte nichtionische Tenside sind Fettalkoholalkoxylate oder Zuckertenside oder Mischungen dieser.

Die flüssige Spalthilfe kann auch aus einer wässerigen Lösung oder wässerigen Dispersion einer anorganischen oder organischen Säure ausgewählt werden; besonders bevorzugt wird Salzsäure oder eine wässerige Essigsäure-Lösung verwendet.

Die Menge und Konzentration der wässerigen Lösung oder wässerigen Dispersion kann der Fachmann ohne weiteres durch eine überschaubare Anzahl von Versuchen unter Berücksichtigung des Aufbaus und der Zusammensetzung der zunächst hergestellten Holzspanplatte und der herzustellenden Leichtbau-Sandwichplatte 100 bestimmen.

Zum Aufbringen der flüssigen Spalthilfe 42 kann beispielsweise neben und/oder oberhalb der Fertigungsbahn eine geeignete Vorrichtung 40 vorgesehen werden, mit der die Flüssigkeit auf- und/oder eingebracht wird. Die Vorrichtung 40 kann beispielsweise eine oder mehrere Sprühvorrichtungen darstellen. Diese kann(können) vor, neben und/oder unmittelbar nach der Pressvorrichtung angeordnet werden. Die flüssige Spalthilfe 42 kann beispielsweise vor dem Pressen von oben und/oder von der Seite auf die untere Decklage 11 und/oder von unten auf die obere Decklage 22 aufgebracht werden. In Fig. 1 ist gemäß einer beispielhaften Ausführungsform das Aufsprühen vor dem Pressen von oben mit der Sprühvorrichtung 40 auf die untere Decklage 11 gezeigt. Wird die flüssige Spalthilfe 42 während des Pressens aufgebracht, so kann die Holzspanplatte beispielsweise an oder neben einer oder mehreren Sprühvorrichtung 40 vorbeigeführt werden, die die flüssige Spalthilfe von der Seite auf die Seitenkante der Holzspanplatte aufsprühen. Auch andere Ausführungen sind denkbar.

Nach dem Verlassen der Presszone 60 und damit auch der Pressvorrichtungen 61, 62 trennt sich die Holzspanplatte in der Auftrennzone 70 durch den Wasserdampf und durch Vorliegen der flüssigen Spalthilfe 42 in einfacher Weise in einer horizontalen, parallel zur Förderrichtung verlaufenden Ebene unter Erhalt einer oberen und einer unteren Deckschicht 1, 2. Die obere und untere Deckschicht 1, 2 werden dann beispielsweise durch Elemente 9a, 9b derart auseinandergeführt, dass zwischen beide Deckschichten 1, 2 eine Schaum-Zwischenschicht 3 eingebracht werden kann. Hierzu kann wie in Fig. 1 gezeigt über Spüheinrichtungen 19a, 19b ein schäum- und härtbares Kunststoff-Harz, wie beispielsweise Polyurethan- oder Harnstoff-Formaldehyd-Harz, zwischen die Deckschichten 1, 2 eingebracht, beispielsweise gesprüht, eingedüst oder eingeblasen, und in herkömmlicher Weise aufgeschäumt werden.

Dann können die Deckschichten 1, 2 in der Aushärtzone 80 auf die Solldicke der herzustellenden Leichtbau-Sandwichplatte 100 zusammengeführt und so die Dicke entsprechend eingestellt werden bis die Schaum-Zwischenschicht 3 durch Abfuhr von Wärme ausgehärtet und in ihrer Form fixiert ist. Hierzu kann die Leichtbau-Sandwichplatte 100 bevorzugt in eine Einrichtung mit parallel geführten Pressflächen zum Aufschäumen, Aushärten und Kalibrieren des aufgeschäumten Harzes geführt werden. Dies kann beispielsweise eine aus zwei wärmeableitenden parallelen Walzen oder Platten bestehende Einrichtung sein. Die erhaltene Leichtbau-Sandwichplatte 100 kann im Anschluss beispielsweise durch eine Ablängsäge in Einzelformate mit handelsüblichen Abmessungen vereinzelt werden. Weiterhin kann die Leichtbau-Sandwichplatte 100 mit Verfahren, die aus dem Stand der Technik bekannt sind, weiter- bzw. nachbearbeitet werden. Dies sind beispielsweise Schleifen, Beschichten, Kantenbearbeitung und ähnliche Verfahren. Beispielsweise kann ein Mattieren der Außenfläche(n) einer oder beider Deckschichten durch Feinschleifen bis zur Solldicke der Leichtbau-Sandwichplatte durchgeführt werden.

Gemäß einer weiteren Ausführungsform kann auf eine oder beide Deckschichten beim Verpressen oder erst in einem Nachbearbeitungsverfahren zusätzlich eine Beschichtung aus ein oder mehreren Schichten aufgebracht werden. Dies kann beispielsweise eine Kunststofffolie sein, die im Pressvorgang auf die Deckschicht aufgebracht wird. Die Beschichtung kann auch eine Echtholzauflage sein, wie ein Furnier, oder kann eine dekorative Beschichtung aus einem bedruckten Papier oder mit Tränkharz imprägniertes Papier oder Kunststoff, beispielsweise in Form eines Laminats, aufgebracht werden. Andere Beschichtungen sind auch möglich.

Fig. 2 zeigt eine schematische Darstellung einer bevorzugten Ausführungsform einer erfindungsgemäß hergestellten Leichtbau-Sandwichplatte 100 mit einer oberen Deckschicht 2 aus beleimten Holzspänen, einer unteren Deckschicht 1 aus beleimten Holzspänen und einer Zwischenschicht 3 aus geschäumtem und gehärtetem Kunststoff, die zwischen der oberen und unteren Deckschicht 1, 2 angeordnet ist. Es kann sich bei der oberen und unteren Deckschicht 1, 2 jeweils um eine MDF-, HDF- oder OSB-Platte handeln.

Die hergestellten Leichtbau-Sandwichplatten 100 weisen zudem Übergangszonen 31b, 32b auf, in denen die zwischen den zwei Deckschichten 1, 2 liegende Hartschaumschicht 3 die Unebenheiten der rauen Innenseiten 1b, 2b ausfüllt.

### Versuche:

Es wurden Versuche durchgeführt, um zu untersuchen, ob eine Spaltung in obere und untere Deckschicht anhand der verschiedenen eingesetzten flüssigen Spalthilfen möglich ist oder nicht. Die eingesetzten Materialien und die Durchführung der Versuche sind nachfolgend im Einzelnen angegeben:

### Eingesetzte Materialien:

| | |
|---|---|
| OSB-Fasern: | Holzspäne verschiedener Dicke und Breite, wie sie in der Holzplattenfertigung üblicher Weise verwendet werden |
| pMDI: | polymeres Methylendiisocyanat, Fa. Huntsman Isobond OSB 4300 |
| Wasser | |
| Hydrowax 115: | Paraffinemulsion, Fa. Sasol |
| ACMOS 81-17: | Polyethylenwachsemulsion 20% |
| Na-Dodecylsulfonsäure | CAS: 85536-14-7 |
| Sulfobernsteinsäurediisooctylester | CAS: 577-11-7 |
| Lutensol XP 100 (ethoxylierter Fettalkohol): | Fa. BASF |
| Bravotrenn 5229: | |
| (Trennmittel für pMDI auf Phosphorsäureester-Basis), | Fa. Brusetti |
| Silaphos 104 MDE (ethoxylierter Phosphorsäureester): | Fa. Schill & Seilacher |
| Essigäure | |
| Kaliumhydroxidlösung | 50%ig |

### Versuchsdurchführung:

Die Holzfasern werden mit 3 Gew% pMDI gemischt und in zwei gleiche Portionen geteilt.

Die erste Hälfte wird in loser Schüttung auf einer Aluminiumfolie verteilt. Auf diese Schüttung wird wahlweise Wasser oder die entsprechende zu prüfende Substanz in entsprechender Konzentration aufgesprüht. Auf diese Mischung wird der zweite Teil der pMDI/Holzfasermischung aufgebracht. Der Kuchen wird bei 150°C in einer Laborpresse für 5 Minuten verpresst. Anschließend wird versucht, das auspolymerisierte Material zu spalten. Die Qualität der Spaltung wird visuell bewertet und dokumentiert. Die erhaltenen Ergebnisse sind in der nachfolgenden Tabelle zusammengefasst:

**Tabelle**

| **Material als Spalthilfe** | **Spaltung** |
|---|---|
| Wasser | -- |
| Hydrowax 115 10% | -- |
| ACMOS 81-17 | -- |
| Na-Dodecylsulfonsäure 10%ig | ++ |
| Sulfobernsteinsäurediisooctylester 10%ig | ++ |
| Lutensol XP 100 (ethoxylierter Fettalkohol) | + |
| Silaphos MDE 104 K 10%ig | ○ |
| Bravotrenn 10% | ○ |
| Essigsäure 3%ig | + |
| Essigsäure 3%ig /KOH neutralisiert pH 7 | -- |

| | |
|---|---|
| Legende: -- keine Spaltung möglich; - Spaltung mit hohem Kraftaufwand möglich; o Spaltung möglich; + Spaltung einfach; ++ Spaltung sehr leicht möglich | |

Anhand der Versuche zeigt sich, dass Wasser, Paraffinemulsion, Polyethylenwachsemulsion und auf einen pH-Wert von 7 neutralisierte wässerige Essigsäure-Lösung keine Spaltung im Verfahren der Erfindung ermöglichten.

Demgegenüber tragen die Spalthilfen gemäß der vorliegenden Erfindung, insbesondere anionische Tenside, wie Na-Dodecylsulfonsäure, solche auf Phosphorsäureester-Basis, ethoxylierte Phosphorsäureester, Sulfobernsteinsäurediisooctylester, oder nichtionische Tenside, wie ethoxylierte Fettalkohole, zu einer Spaltung bei, die zum Teil sogar deutlich erleichtert wird. Im Falle von Essigsäure in wässeriger Lösung als Spalthilfe kann ebenfalls eine einfache Spaltung herbeigeführt werden, wohingegen eine nicht mehr saure, sondern neutralisierte Essigsäure-Lösung keine Spaltung mehr ermöglicht.

Die vorliegende Erfindung stellt daher erstmals eine flüssige Spalthilfe zur Verfügung mit deren Hilfe die Herstellung einer Leichtbau-Sandwichplatte in einfacherer Weise durchgeführt werden kann.

### Bezugszeichenliste

- 1: untere Deckschicht
- 1a: Außenfläche der unteren Deckschicht
- 1b: Innenfläche der unteren Deckschicht
- 2: obere Deckschicht
- 2a: Außenfläche der oberen Deckschicht
- 2b: Innenfläche der oberen Deckschicht
- 3: Hartschaum
- 5: Förderband
- 9a, 9b: Elemente zum Auseinanderführen der Deckschichten
- 10: Streuvorrichtung für die untere Decklage
- 11: untere Decklage
- 19a, 19b: Sprüheinrichtungen für den Hartschaum
- 20: Streuvorrichtung für die obere Decklage
- 22: obere Decklage
- 31b: untere Übergangszone
- 32b: obere Übergangszone
- 40: Aufbringvorrichtung
- 42: flüssige Spalthilfe
- 50: Aufstreuzone
- 60: Presszone
- 61: erste Transportband-Presse
- 62: zweite Transportband-Presse
- 70: Auftrennzone
- 80: Aushärtzone
- 100: Leichtbau-Sandwichplatte

## Patentansprüche

1. Kontinuierliches Verfahren zum Herstellen einer Leichtbau-Sandwichplatte (100), umfassend eine untere und eine obere Deckschicht (1, 2), jeweils aus verpressten und miteinander verklebten Holzspänen sowie eine zwischen den beiden Deckschichten (1, 2) angeordnete und damit fest verbundene Zwischenschicht (3), die Hartschaum aufweist, umfassend die nachfolgenden Schritte:
1) Bereitstellen einer unteren und oberen Decklage (11, 22) aus gestreuten, beleimten Holzspänen;
2) Verpressen der erhaltenen oberen und unteren Decklage (11, 22) unter Anwendung von Druck und Temperatur zu einer Holzspanplatte;
3) Druckentlastung der Holzspanplatte, wodurch die Holzspanplatte infolge des in ihrer Kernzone aufgebauten Dampfdrucks aufreißt und sich in eine obere und untere Deckschicht (1, 2) trennt;
4) Auseinanderführen der oberen und unteren Deckschichten (1, 2), so dass eine Zwischenschicht (3) eingebracht werden kann;
5) Einbringen einer Zwischenschicht (3) in Form von zu Hartschaum aufschäum- und aushärtbaren Polymeren zwischen die obere und untere Deckschicht (1, 2);
6) Aufschäumen der Polymeren, bis diese zähflüssig bis plastisch verformbar, aber noch verpressbar sind;
7) Zusammenführen der Deckschichten (1, 2) auf die Solldicke der herzustellenden Leichtbau-Sandwichplatte (100) und Halten der Dicke bis die Zwischenschicht (3) ausreagiert hat unter Erhalt der Leichtbau-Sandwichplatte (100),
**dadurch gekennzeichnet, dass**
vor dem Verpressen von Schritt 2), und vor Durchführen von Schritt 3), eine flüssige Spalthilfe (42) zu einer oder beiden Decklagen (1, 2) der Holzspanplatte zugegeben wird oder auf eine oder beide Decklagen (1, 2) der Holzspanplatte aufgebracht wird, wobei die flüssige Spalthilfe (42) eine wässerige Lösung oder eine wässerige Dispersion darstellt, und die Spalthilfe (42) ausgewählt wird aus einer Gruppe, bestehend aus ein oder mehreren Tensiden, oder aus einer Gruppe, bestehend aus ein oder mehreren Säuren.

2. Kontinuierliches Verfahren nach Anspruch 1,
**dadurch gekennzeichnet, dass**
die flüssige Spalthilfe derart auf eine oder beide Decklagen (1, 2) und/oder auf eine oder beide Deckschichten (11, 22) der Holzspanplatte aufgebracht wird, dass diese teilweise oder vollständig mit flüssiger Spalthilfe befeuchtet oder teilweise oder vollständig mit flüssiger Spalthilfe getränkt werden.

3. Kontinuierliches Verfahren nach Anspruch 1 oder 2,
**dadurch gekennzeichnet, dass**
die Tenside ausgewählt werden aus anionischen, kationischen oder nichtionischen Tensiden.

4. Kontinuierliches Verfahren nach Anspruch 3,
**dadurch gekennzeichnet, dass**
die anionischen Tenside ausgewählt werden aus Tensiden, die eine Carboxylat-, Sulfonat-, Sulfat-, Phosphat-Gruppe oder andere polare Gruppe aufweisen, bevorzugt ausgewählt aus einer Gruppe, bestehend aus Alkylcarboxylaten, Alkylbenzolsulfonaten, sekundären Alkylsulfonaten, Fettalkoholsulfaten, Fettalkoholethersulfaten, bevorzugt Alkylethersulfaten, Phosporsäureestern bevorzugt Alkyl- und Arylphosphaten, Alkyl- und Aryletherphosphaten, insbesondere ethoxylierten Phosphorsäureestern, Tauriden oder Succinaten, bevorzugt Sulfosuccinaten, oder Mischungen dieser,
besonders bevorzugt Alkylbenzolsulfonate, sekundären Alkylsulfonate, Phosporsäureester, insbesondere ethoxylierte Phosphorsäureester, Phosphorsäureester von Fettalkoholen, wie C₂-C₁₅-Fettalkoholen, oder Phosphorsäureester von Fettalkoholethoxylaten, oder Succinate, bevorzugt Sulfosuccinate, oder Mischungen dieser.

5. Kontinuierliches Verfahren nach Anspruch 3,
**dadurch gekennzeichnet, dass**
die kationischen Tenside ausgewählt werden aus der Gruppe, bestehend aus quartären Ammonium-Verbindungen, besonders bevorzugt Tetraalkylammonium-Verbindungen.

6. Kontinuierliches Verfahren nach Anspruch 3,
**dadurch gekennzeichnet, dass**
die nichtionischen Tenside ausgewählt werden aus der Gruppe, bestehend aus Fettalkoholalkoxylaten, bevorzugt Fettalkoholethoxylaten, Fettsäurealkoxylaten, bevorzugt Fettsäureethoxylaten, Fettsäureesteralkoxylaten, bevorzugt Fettsäureesterethoxylaten, Blockpolymeren, bevorzugt amphiphile Blockcopolymeren, Fettaminalkoxylaten, bevorzugt Fettaminethoxylaten, oder Zuckertensiden, bevorzugt Alkylpolyglykosiden, Methylglycosidestern, Ethylglycosidestern, Sorbitanestern, N-Methylglucamid, Sacharoseestern, oder Mischungen dieser, besonders bevorzugt Fettalkoholalkoxylate oder Zuckertenside oder Mischungen dieser.

7. Kontinuierliches Verfahren nach einem der vorangehenden Ansprüche 1 oder 2,
**dadurch gekennzeichnet, dass**
die Säuren ausgewählt werden aus der Gruppe, bestehend aus anorganischen oder organischen Säuren.

8. Kontinuierliches Verfahren nach einem der vorangehenden Ansprüche 1, 2 oder 7,
**dadurch gekennzeichnet, dass**
die Säuren ausgewählt werden aus der Gruppe bestehend aus anorganischen Säuren, ausgewählt aus Schwefelsäure, Salzsäure, Phosphorsäure oder Salpetersäure, besonders bevorzugt Salzsäure.

9. Kontinuierliches Verfahren nach einem der vorangehenden Ansprüche 1, 2 oder 7,
**dadurch gekennzeichnet, dass**
die Säuren ausgewählt werden aus der Gruppe bestehend aus organischen Säuren, ausgewählt aus Ameisensäure, Essigsäure, Zitronensäure, Weinsäure oder Milchsäure, besonders bevorzugt Essigsäure.

10. Kontinuierliches Verfahren nach einem der vorangehenden Ansprüche 1 bis 9,
**dadurch gekennzeichnet, dass**
Schritt 2) zwischen beheizten Pressflächen in Form von Walzen und/oder Transportbändern (61, 62) mit einem Pressdruck von bis zu 30 bar und einer Temperatur der Pressflächen von 130 bis 250°C durchgeführt wird.

11. Kontinuierliches Verfahren nach einem der vorangehenden Ansprüche 1 bis 10,
**dadurch gekennzeichnet, dass**
als Hartschaum ein Polyurethanhartschaum oder Harnstoff-Formaldehyd-Harz-Schaum eingesetzt wird.

12. Kontinuierliches Verfahren nach einem der vorangehenden Ansprüche 1 bis 11,
**dadurch gekennzeichnet, dass**
die obere Deckschicht (2) zur unteren Deckschicht (1) gleich oder von dieser verschieden ausgewählt wird.

13. Kontinuierliches Verfahren nach einem der vorangehenden Ansprüche 1 bis 12,
**dadurch gekennzeichnet, dass**
die obere Deckschicht (2) im Vergleich zur unteren Deckschicht (1) mit der gleichen oder einer anderen Dichte, Dicke, Elastizität und/oder Porengröße ausgewählt wird.

14. Kontinuierliches Verfahren nach einem der vorangehenden Ansprüche 1 bis 13,
**dadurch gekennzeichnet, dass**
die obere Deckschicht (2) und/oder die untere Deckschicht (1) ausgewählt wird aus einer MDF-Platte, HDF-Platte oder OSB-Platte.

15. Kontinuierliches Verfahren nach einem der vorangehenden Ansprüche 1 bis 14,
**dadurch gekennzeichnet, dass**
vor dem Aufschämen der Zwischenschicht (3) in diese Materialien eingebracht werden, welche die Eigenschaften der Leichtbau-Sandwichplatte (100) modifizieren, insbesondere ausgewählt aus Glasfasern, Kohlefasern, Holzfasern, Siliziumoxid, Bleisulfat, Schaumpartikel aus Kunststoffen, bevorzugt Polystyrol, oder andere Schäume, bevorzugt organische Schäume aus Mais- oder Weizenstärke.

16. Kontinuierliches Verfahren nach einem der vorangehenden Ansprüche 1 bis 15, zur Herstellung von Leichtbau-Sandwichplatten (100) mit: einer unteren Deckschicht (1) und einer oberen Deckschicht (2), die beide aus dicht gepackten und fest miteinander verklebten Holzspänen bestehen und eine glatte Außenfläche (1a, 2a), sowie eine raue, dampfdurchlässige Innenfläche (1b, 2b) aufweisen sowie einer Zwischenschicht (3), die einen Kunstharzhartschaum umfasst, die zwischen der unteren und der oberen Deckschicht (1, 2) angeordnet und damit fest verbunden ist, umfassend mindestens folgende Schritte:
1) Bereitstellen einer geschichteten Lage, die mindestens eine gestreute untere Decklage (11) und mindestens eine darüber gestreute obere Decklage (22), beide aus beleimten Holzspänen, aufweist;
2) Verpressen dieser Lage zwischen beheizten Pressflächen mit einem Pressdruck von bis zu 30 bar und einer Temperatur der Pressflächen von 130 bis 250°C zu einer Holzspanplatte;
3) Auseinanderführen der Pressflächen und dadurch Druckentlastung der Holzspanplatte, wodurch die Holzspanplatte infolge des in ihrer Kernzone aufgebauten Dampfdrucks aufreißt und sich in zwei Deckschichten (1, 2) mit jeweils einer glatten Außenfläche (1a, 2a) und einer rauen Innenfläche (1b, 2b) teilt;
4) Auseinanderführen der Deckschichten (1, 2), so dass die Zwischenschicht (3) zwischen diesen eingebracht werden kann;
5) Sprühen von zu Hartschaum aufschäum- und aushärtbaren Polymeren, bevorzugt eines Polyurethanhartschaumsystems mit mindestens folgenden Komponenten:
a) Isocyanat und/oder Polyisocyant(e);
b) mindestens ein Polyol und
c) ein oder mehrere verdampfbare(s) Treibmittel, auf die Innenfläche(n) der unteren Deckschicht (1) oder beider Deckschichten (1, 2);
6) Aufschäumen und Kondensieren des Polymerhartschaumsystems, insbesondere Polyurethansystems, bis die Polymerhartschaumschicht(en) zähflüssig bis plastisch verformbar, aber noch verpressbar ist/sind;
7) Rückführen der oberen und/oder unteren Deckschicht (1, 2), so dass ihr Abstand, wenn eine Leichtbau-Sandwichplatte (100) gefertigt werden soll, bei der beide Deckschichten (1, 2) eine glatte Außenfläche (1a, 2a) aufweisen, gleich der Solldicke oder, wenn eine Leichtbau-Sandwichplatte (100) gefertigt werden soll, bei der eine oder beide Deckschichten (1, 2) eine durch Feinschleifen mattierte Außenfläche (1a, 2a) aufweisen, 0,1 bis 0,3 mm größer ist als die Solldicke der Leichtbau-Sandwichplatte (100);
8) Stabilisieren der nach 7) kalibrierten Leichtbau-Sandwichplatte (100), indem man sie zwischen in dem in 7) definierten Abstand parallel verlaufenden Pressflächen führt, bis die Zwischenschicht (3) zu Polymerhartschaum ausreagiert hat;
9) Konfektionieren (Ablängen) und Versäubern der Kanten der als Endlosband gefertigten Leichtbau-Sandwichplatte (100) zu Platten mit handelsüblichen Abmessungen; und
10) gegebenenfalls Mattieren der Außenfläche(n) (1a, 2a) einer oder beider Deckschichten (1, 2) durch Feinschleifen bis zur Solldicke der Leichtbau-Sandwichplatte (100);
wobei
a) im Schritt 1) zwischen die Decklagen (11, 22) keine Zwischenlage gestreut wird;
b) die Temperatur der Pressflächen und die Dauer des Pressvorgangs so gewählt werden, dass sich im Bereich der Innenflächen (1b, 2b) der Deckschichten (1, 2) ein hoher Dampfdruck aufbaut, der bei der durch das Auseinanderführen der Pressflächen im Schritt 3) bewirkten Druckentlastung die in Schritt 2) erzeugte Holzspanplatte aufreißt und in zwei Deckschichten (1, 2) aus dicht gepackten, fest miteinander verklebten Holzspänen mit glatten Außenflächen (1a, 2a) und rauen Innenflächen (1b, 2b) trennt;
c) die Deckschichten (1, 2) beim Verlassen der Presse mittels Walzen und/oder Transportbändern auseinander geführt werden, so dass der Abstand ihrer Innenflächen (1b, 2b) groß genug wird, um die Sprüh- oder Einbringungsvorrichtung (19a, 19b) für das Sprühen oder sonstige Einbringen des Polymerhartschaumsystems gemäß Schritt 5) zwischen den Deckschichten (1, 2) platzieren zu können;
d) die Wärme, die beim Verpressen der Deckschichten (1, 2) in diese eingebracht wurde genutzt wird, um den Reaktionsprozess des Polymerhartschaumsystems zu beschleunigen;
**dadurch gekennzeichnet, dass**
vor dem Verpressen von Schritt 2), und vor Durchführen von Schritt 3), eine flüssige Spalthilfe (42) zu einer oder beiden Decklagen (1, 2) der Holzspanplatte zugegeben wird oder auf eine oder beide Decklagen (1, 2) der Holzspanplatte aufgebracht wird, wobei die flüssige Spalthilfe (42) eine wässerige Lösung oder wässerige Dispersion darstellt, und die Spalthilfe (42) ausgewählt wird aus einer Gruppe, bestehend aus ein oder mehreren Tensiden, oder aus einer Gruppe, bestehend aus ein oder mehreren Säuren.

## Claims

1. Continuous process for manufacturing a lightweight sandwich panel (100), comprising a lower and an upper cover layer (1, 2), each made of compressed wood chips glued together, and an intermediate layer (3) arranged between the two cover layers (1, 2) and firmly connected thereto, which has rigid foam, comprising the following steps:
1) Providing a lower and upper cover coating (11, 22) of scattered, glued wood chips;
2) Pressing the obtained upper and lower cover coating (11, 22) using pressure and temperature to form a particle board;
3) Relieving the pressure of the particle board, whereby the particle board tears open due to the steam pressure built up in its core zone and separates into an upper and lower cover layer (1, 2);
4) Separating the upper and lower cover layers (1, 2) so that an intermediate layer (3) can be introduced;
5) Introducing an intermediate layer (3) between the upper and lower cover layers (1, 2) in the form of polymers which can be foamed and cured to become rigid foam;
6) Foaming of the polymers until they are viscous to plastically deformable but still compressible;
7) Bringing the cover layers (1, 2) together to the target thickness of the lightweight sandwich panel (100) to be manufactured and maintaining the thickness until the intermediate layer (3) has reacted to obtain the lightweight sandwich panel (100),
**characterized in that**
before the pressing of step 2), and before carrying out step 3), a liquid splitting aid (42) is added to one or both cover coatings (11, 22) of the particle board or is applied to one or both cover coatings (11, 22) of the particle board, wherein the liquid splitting aid (42) is an aqueous solution or an aqueous dispersion, and the splitting aid (42) is selected from a group consisting of one or more surfactants or from a group consisting of one or more acids.

2. Continuous process according to claim 1,
**characterized in that**
the liquid splitting aid is applied to one or both cover coatings (11, 22) and/or to one or both of the particle board in such a way that they are partially or completely moistened with liquid splitting aid or partially or completely soaked with liquid splitting aid.

3. Continuous process according to claim 1 or 2,
**characterized in that**
the surfactants are selected from anionic, cationic or nonionic surfactants.

4. Continuous process according to claim 3,
**characterized in that**
the anionic surfactants are selected from surfactants which have a carboxylate, sulfonate, sulfate, phosphate group or other polar group,
preferably selected from a group consisting of alkyl carboxylates, alkyl benzene sulfonates, secondary alkyl sulfonates, fatty alcohol sulfates, fatty alcohol ether sulfates, preferably alkyl ether sulfates, phosphoric acid esters, preferably alkyl and aryl phosphates, alkyl and aryl ether phosphates, in particular ethoxylated phosphoric acid esters, taurides or succinates, preferably sulfosuccinates, or mixtures of these,
particularly preferably alkyl benzene sulfonates, secondary alkyl sulfonates, phosphoric acid esters, in particular ethoxylated phosphoric acid esters, phosphoric acid esters of fatty alcohols, such as C₂-C₁₅ fatty alcohols, or phosphoric acid esters of fatty alcohol ethoxylates, or succinates, preferably sulfosuccinates, or mixtures of these.

5. Continuous process according to claim 3,
**characterized in that**
the cationic surfactants are selected from the group consisting of quaternary ammonium compounds, particularly preferred tetraalkylammonium compounds.

6. Continuous process according to claim 3,
**characterized by that**
the nonionic surfactants are selected from the group consisting of fatty alcohol alkoxylates, preferably fatty alcohol ethoxylates, fatty acid alkoxylates, preferably fatty acid ethoxylates, fatty acid ester alkoxylates, preferably fatty acid ester ethoxylates, block polymers, preferably amphiphilic block copolymers, fatty amine alkoxylates, preferably fatty amine ethoxylates, or sugar surfactants, preferably alkyl polyglycosides, methyl glycoside esters, ethyl glycoside esters, sorbitan esters, N-Methylglucamide, sucrose esters, or mixtures of these, particularly preferably fatty alcohol alkoxylates or sugar surfactants or mixtures of these.

7. Continuous process according to one of the preceding claims 1 or 2,
**characterized in that**
the acids are selected from the group consisting of inorganic or organic acids.

8. Continuous process according to any one of the preceding claims 1, 2 or 7,
**characterized in that**
the acids are selected from the group consisting of inorganic acids selected from sulfuric acid, hydrochloric acid, phosphoric acid or nitric acid, particularly preferably hydrochloric acid.

9. Continuous process according to any one of the preceding claims 1, 2 or 7,
**characterized in that**
the acids are selected from the group consisting of organic acids selected from formic acid, acetic acid, citric acid, tartaric acid or lactic acid, particularly preferably acetic acid.

10. Continuous method according to any one of the preceding claims 1 to 9,
**characterized in that**
step 2) is carried out between heated pressing surfaces in the form of rollers and / or conveyor belts (61, 62) with a pressing power of up to 30 bar and a temperature of the pressing surfaces of 130 to 250°C.

11. Continuous process according to any one of the preceding claims 1 to 10,
**characterized in that**
a rigid polyurethane foam or urea-formaldehyde resin foam is used as the rigid foam.

12. Continuous process according to any one of the preceding claims 1 to 11,
**characterized in that**
the upper cover layer (2) is selected to be the same as or different from the lower cover layer (1).

13. Continuous process according to any one of the preceding claims 1 to 12,
**characterized in that**
the upper cover layer (2) is selected with the same or a different density, thickness, elasticity and/or pore size compared to the lower cover layer (1).

14. Continuous process according to any one of the preceding claims 1 to 13,
**characterized in that**
the upper cover layer (2) and/or the lower cover layer (1) is selected from an MDF board, HDF board or OSB board.

15. Continuous process according to any one of the preceding claims 1 to 14,
**characterized in that**
before the foaming of the intermediate layer (3), materials are introduced into the same, which modify the properties of the lightweight sandwich panel (100), in particular selected from glass fibers, carbon fibers, wood fibers, silicon oxide, lead sulfate, foam particles made of plastics, preferably polystyrene, or other foams, preferably organic foams made from corn or wheat starch.

16. Continuous process according to any one of the preceding claims 1 to 15,
for manufacturing lightweight sandwich panels (100) with: a lower cover layer (1) and an upper cover layer (2) which both consist of densely packed wood chips firmly glued together and have a smooth outer surface (1a, 2a) as well as a rough, vapor-permeable inner surface (1b, 2b) as well as an intermediate layer (3), which comprises a synthetic resin rigid foam, which is arranged between the lower and the upper cover layer (1, 2) and is firmly connected thereto, comprising at least the following steps:
1) Providing a layered coating having at least one scattered lower cover coating (11) and at least one upper cover coating (22) scattered across the former, both of glued wood chips;
2) Pressing this coating between heated pressing surfaces with a pressing power of up to 30 bar and a temperature of the pressing surfaces of 130 to 250° C to form a particle board;
3) Separating the pressing surfaces and thus relieving the pressure of the particle board, whereby the particle board tears open due to the steam pressure built up in its core zone and splits into two cover layers (1, 2), with a smooth outer surface (1a, 2a) and a rough inner surface (1b, 2b) each;
4) Separating the cover layers (1, 2) so that the intermediate layer (3) can be introduced between them;
5) Spraying of polymers that can be foamed and cured to form rigid foam, preferably a rigid polyurethane foam system with at least the following components:
a) isocyanate and/or polyisocyanate(s);
b) at least one polyol and
c) one or more vaporizable propellants, onto the inner surface(s) of the lower cover layer (1) or both cover layers (1, 2);
6) Foaming and condensing the rigid polymer foam system, in particular polyurethane system, until the rigid polymer foam layer(s) is/are viscous to plastically deformable but still compressible;
7) Returning the upper and/or lower cover layer (1, 2) so that their spacing, when a lightweight sandwich panel (100) is to be manufactured, in which both cover layers (1, 2) have a smooth outer surface (1a, 2a), is equal to the target thickness or, if a lightweight sandwich panel (100) is to be manufactured in which one or both cover layers (1, 2) have an outer surface (1a, 2a) that has been matted by fine grinding, is 0.1 to 0.3 mm greater than the target thickness of the lightweight sandwich panel (100);
8) Stabilizing the lightweight sandwich panel (100) calibrated according to 7) by guiding it between parallel pressing surfaces at the distance defined in 7) until the intermediate layer (3) has reacted to form rigid polymer foam;
9) Finishing (cutting to length) and neatening the edges of the lightweight sandwich panel (100) manufactured as an endless strip to form panels with commercially available dimensions; and
10) Optionally matting the outer surface(s) (1a, 2a) of one or both cover layers (1, 2) by fine grinding to the desired thickness of the lightweight sandwich panel (100);
wherein
a) in step 1) no intermediate coating is scattered between the cover coatings (11, 22)
b) the temperature of the pressing surfaces and the duration of the pressing process are selected in such a way that a high vapor pressure builds up in the area of the inner surfaces (1b, 2b) of the cover layers (1, 2), which in the pressure relief effected by the separation of the pressing surfaces in step 3) tears open the particle board produced in step 2) and separates it into two cover layers (1, 2) of densely packed wood chips firmly glued together, with smooth outer surfaces (1a, 2a) and rough inner surfaces (1b, 2b);
c) the cover layers (1, 2) are guided apart by means of rollers and/or conveyor belts when leaving the press, so that the distance between their inner surfaces (1b, 2b) becomes large enough to be able to place the spraying or introduction device (19a, 19b) for the spraying or other introduction of the rigid polymer foam system according to step 5) between the cover layers (1, 2);
d) the heat that was introduced into the cover layers (1, 2) when they were pressed is used to accelerate the reaction process of the rigid polymer foam system;
**characterized in that**
before the pressing of step 2), and before carrying out step 3), a liquid splitting aid (42) is added to one or both cover coatings (11, 22) of the particle board or is applied to one or both cover coatings (11, 22) of the particle board, wherein the liquid splitting aid (42) is an aqueous solution or aqueous dispersion, and the splitting aid (42) is selected from a group consisting of one or more surfactants or from a group consisting of one or more acids.

## Revendications

1. Procédé continu de fabrication d'un panneau en sandwich à structure légère (100), comprenant une couche de recouvrement inférieure et supérieure (1, 2) composée respectivement de copeaux de bois comprimés et collés ensemble, de même qu'une couche intermédiaire (3) disposée entre les deux couches de recouvrement (1, 2) et connectée fixement à celles-ci et qui présente de la mousse dure, comprenant les étapes suivantes :
1) mise à disposition d'une couche de recouvrement inférieure et supérieure (11, 22) en panneaux de bois dispersés collés ;
2) compression de la couche de recouvrement supérieure et inférieure obtenue (11,22) en appliquant de la pression et de la température à un panneau de copeaux de bois ;
3) décharge de pression du panneau de copeaux de bois, ce qui a pour effet que le panneau de copeaux de bois casse suite à la pression de vapeur établie dans sa zone centrale et se divise en une couche de recouvrement inférieure et supérieure (1, 2) ;
4) écartement des couches de recouvrement supérieure et inférieure (1, 2) de manière à ce qu'une couche intermédiaire (3) puisse être introduite ;
5) introduction d'une couche intermédiaire (3) sous forme de polymères pouvant mousser et durcir jusqu'à obtenir de la mousse dure entre la couche de recouvrement supérieure et inférieure (1, 2) ;
6) moussage des polymères jusqu'à ce que ceux-ci soient visqueux jusqu'à déformables plastiquement mais encore compressibles ;
7) regroupement des couches de recouvrement (1, 2) jusqu'à l'épaisseur théorique du panneau en sandwich à structure légère à fabriquer (100) et maintien de l'épaisseur jusqu'à ce que la couche intermédiaire (3) ait réagi en conservant le panneau en sandwich à structure légère (100),
**caractérisé en ce que**,
avant la compression de l'étape 2) et avant la réalisation de l'étape 3), une aide au malaxage liquide (42) est ajoutée à une ou deux couches de recouvrement (11, 22) du panneau en copeaux de bois ou est appliquée sur une ou deux couches de recouvrement (11, 22) du panneau en copeaux de bois, l'aide au malaxage liquide (42) constituant une solution aqueuse ou une dispersion aqueuse, et que l'aide au malaxage (42) est sélectionnée dans un groupe composé d'un ou plusieurs agents tensioactifs, ou un groupe composé d'un ou plusieurs acides.

2. Procédé continu selon la revendication 1,
**caractérisé en ce que**
l'aide au malaxage liquide est appliquée sur une ou deux couches de recouvrement (11, 22) et/ou sur une ou deux du panneau en copeaux de bois de manière à ce que celles-ci soient partiellement ou totalement humidifiées avec de l'aide au malaxage liquide ou imprégnées partiellement ou totalement d'aide au malaxage liquide.

3. Procédé continu selon la revendication 1 ou 2,
**caractérisé en ce que**
les agents tensioactifs sont sélectionnés parmi des agents tensioactifs anioniques, cationiques ou non ioniques.

4. Procédé continu selon la revendication 3,
**caractérisé en ce que**
les agents tensioactifs sont sélectionnés parmi des agents tensioactifs qui présentent un groupe carboxylate, sulfonate, sulfate, phosphate ou autre groupe polaire, de préférence sélectionné dans un groupe composé des alkyles carboxylate, alkylbenzène sulfonates, alkyle sulfonate secondaires, sulfates d'alcool gras, éthersulfates d'alcool gras, de préférence alkyléther sulfates, esters d'acide phosphorique, de préférence alkyl- et arylphosphate, alkyl- et aryléther phosphates, en particulier esters d'acide phosphorique éthoxylés, taurides ou succinates, de préférence sulfosuccinates ou leurs mélanges,
très préférentiellement alkylbenzène sulfonates, alkylsulfonates secondaires, esters d'acide phosphorique, en particulier esters d'acide phosphorique éthoxylés, esters d'acide phosphorique d'alcool gras, comme les alcools gras C₂-C₁₅, ou esters d'acide phosphorique d'éthoxylates d'alcool gras ou succinates, de préférence sulfosuccinates ou leurs mélanges.

5. Procédé continu selon la revendication 3,
**caractérisé en ce que**
les agents tensioactifs cationiques sont sélectionnés dans le groupe composé des composés quaternaires d'ammonium, particulier de préférence des composés de tétraalkylammonium.

6. Procédé continu selon la revendication 3,
**caractérisé en ce que**
les agents tensioactifs non ioniques sont sélectionnés dans le groupe composé des alcoxylates d'alcool gras, de préférence des éthoxylates d'alcool gras, des alcoxylates d'acide gras, de préférence des éthoxylates d'acides gras, des alcoxylates d'esters d'acides gras, de préférence des éthoxylates d'esters d'acides gras, des polymères blocs, de préférence des copolymères blocs amphiphiles, des alcoxylates d'amines gras, de préférence des éthoxylates d'amines gras ou des agents tensioactifs de sucre, de préférence des alkylpolyglycosides, des méthylglycoside esters, des éthylglycoside esters, des sorbitanesters, du N-méthylglucamide, des esters de saccharose, ou leurs mélanges, très préférentiellement des alcoxylates d'alcool gras ou des agents tensioactifs de sucre ou leurs mélanges.

7. Procédé continu selon une des revendications précédentes 1 ou 2,
**caractérisé en ce que**
les acides sont sélectionnés dans le groupe composé des acides anorganiques ou organiques.

8. Procédé continu selon une des revendications précédentes 1, 2 ou 7,
**caractérisé en ce que**
les acides sont sélectionnés dans le groupe composé des acides anorganiques, sélectionnés parmi l'acide sulfurique, l'acide chlorhydrique, l'acide phosphorique ou l'acide nitrique, très préférentiellement l'acide chlorhydrique.

9. Procédé continu selon une des revendications précédentes 1, 2 ou 7,
**caractérisé en ce que**
les acides sont sélectionnés dans le groupe composé des acides organiques, sélectionnés parmi l'acide formique, l'acide acétique, l'acide citrique, l'acide tartrique ou l'acide lactique, en particulier l'acide acétique.

10. Procédé continu selon une des revendications précédentes 1 à 9,
**caractérisé en ce que**
l'étape 2) est réalisée entre des surfaces de compression chauffées sous forme de cylindres et/ou de bandes transporteuses (61, 62) avec une force de compression allant jusqu'à 30 bars et une température des surfaces de compression de 130 à 250 °C.

11. Procédé continu selon une des revendications précédentes 1 à 10,
**caractérisé en ce que**
de la mousse de résine d'urée-formaldéhyde ou une mousse dure de polyuréthane est utilisée comme mousse dure.

12. Procédé continu selon une des revendications précédentes 1 à 11,
**caractérisé en ce que**
la couche de recouvrement supérieure (2) est sélectionnée de manière à être identique à la couche de recouvrement inférieure (1) ou différente de celle-ci.

13. Procédé continu selon une des revendications précédentes 1 à 12,
**caractérisé en ce que**
la couche de recouvrement supérieure (2) est sélectionnée de manière à avoir une densité, épaisseur, élasticité et/ou taille de pores identique ou différente de celle de la couche de recouvrement inférieure (1).

14. Procédé continu selon une des revendications précédentes 1 à 13,
**caractérisé en ce que**
la couche de recouvrement supérieure (2) et/ou la couche de recouvrement inférieure (1) est sélectionnée parmi un panneau de MDF, un panneau de HDF ou un panneau d'OSB.

15. Procédé continu selon une des revendications précédentes 1 à 14,
**caractérisé en ce que**,
avant le moussage de la couche intermédiaire (3), sont intégrés dans celle-ci des matériaux qui modifient les propriétés du panneau en sandwich de structure légère (100), en particulier sélectionnés parmi les fibres de verre, les fibres de carbone, les fibres de bois, l'oxyde de silicium, le sulfate de plomb, des particules de mousse de matières plastiques, en particulier de polystyrène ou d'autres mousses, de préférence des mousses organiques d'amidon de maïs ou de blé.

16. Procédé continu selon une des revendications précédentes 1 à 15 pour la fabrication d'un panneau en sandwich à structure légère (100), comprenant : une couche de recouvrement inférieure (1) et supérieure (2), toutes deux composées de copeaux de bois compactés et collés solidement ensemble, et présentant une surface extérieure lisse (1a, 2a) ainsi qu'une surface intérieure rugueuse perméable à la vapeur (1b, 2b), de même qu'une couche intermédiaire (3) qui comprend une mousse dure de résine synthétique qui est disposée entre la couche de recouvrement inférieure et supérieure (1, 2) et est connectée fixement à celle-ci, comprenant au moins les étapes suivantes :
1) mise à disposition d'une couche stratifiée qui présente au moins une couche inférieure dispersée (11) et au moins une couche supérieure dispersée dessus (22), toutes deux en panneaux de bois collés ;
2) compression de cette couche entre des surfaces de compression chauffées avec une pression de compression allant jusqu'à 30 bars et une température des surfaces de compression de 130 à 250 °C pour obtenir un panneau de copeaux de bois ;
3) écartement des surfaces de compression et ainsi décharge de pression du panneau en copeaux de bois, ce qui a pour effet que le panneau en copeaux de bois casse en raison de la pression de vapeur établie dans sa zone centrale et se divise en deux couches de recouvrement (1, 2) avec respectivement une surface extérieure lisse (1a, 2a) et une surface intérieure rugueuse (1b, 2b) ;
4) écartement des couches de recouvrement (1, 2) de manière à ce que la couche intermédiaire (3) puisse être introduite entre celles-ci ;
5) pulvérisation de polymères pouvant mousser et durcir en une mousse dure, de préférence d'un système de mousse dure de polyuréthane ayant au moins les composants suivants :
a) isocyanate et/ou polyisocyanate(s) ;
b) au moins un polyol et
c) un ou plusieurs agents propulseurs vaporisables sur la ou les surfaces intérieures de la couche de recouvrement inférieur (1) ou des deux couches de recouvrement (1, 2) ;
6) moussage et condensation du système de mousse dure de polymère, en particulier du système de polyuréthane, jusqu'à ce que la ou les couches de mousse dure de polymère soient visqueuses jusqu'à déformables plastiquement mais encore compressibles ;
7) retour de la couche de recouvrement supérieure et/ou inférieure (1, 2) de manière à ce que sa distance, lorsque doit être fabriqué un panneau en sandwich à structure légère (100) dans lequel les deux couches de recouvrement (1, 2) présentent une surface extérieure lisse (1a, 2a), soit égale à l'épaisseur théorique ou, lorsque doit être fabriqué un panneau en sandwich à structure légère (100) dans lequel une ou les deux couches de recouvrement (1, 2) présentent une surface extérieure matifiée (1a, 2a) par meulage de précision, soit de 0,1 à 0,3 mm supérieure à l'épaisseur théorique du panneau en sandwich à structure légère (100) ;
8) stabilisation du panneau en sandwich à structure légère (100) calibré d'après 7) en le guidant entre les surfaces de compression s'étendant parallèlement à la distance définie en 7) jusqu'à ce que la couche intermédiaire (3) ait réagi en se transformant en mousse de polymère dure ;
9) confection (sectionnement en longueur) et nettoyage des arêtes du panneau en sandwich de structure légère fabriqué sous forme d'une bande continue (100) pour obtenir des plaques de dimensions du commerce ; et
10) le cas échéant, matification de la ou des surfaces extérieures (1a, 2a) de l'une ou des deux couches de recouvrement (1, 2) par meulage de précision jusqu'à l'épaisseur théorique du panneau en sandwich à structure légère (100) ;
sachant que
a) dans l'étape 1), aucune couche intermédiaire n'est dispersée entre les couches de recouvrement (11, 22) ;
b) la température des surfaces de compression et la durée du pressage sont sélectionnés de manière à ce que s'établisse, au niveau des surfaces intérieures (1b, 2b) des couches de recouvrement (1, 2), une pression de vapeur élevée à laquelle, du fait de la décharge de pression provoquée par l'écartement des surfaces de compression dans l'étape 3), le panneau de copeaux de bois réalisé dans l'étape 2) casse et se divise en deux couches de recouvrement (1, 2) en copeaux de bois compactés et collés solidement les uns aux autres avec des surfaces extérieures lisses (1a, 2a) et des surfaces intérieures rugueuses (1b, 2b) ;
c) les couches de recouvrement (1, 2), en quittant la presse, sont écartées au moyen de cylindres et/ou de bandes transporteuses, de manière à ce que la distance entre leurs surfaces intérieures (1b, 2b) soit suffisamment importante pour pouvoir positionner le dispositif de pulvérisation ou d'introduction (19a, 19b) pour la pulvérisation ou une autre introduction du système de mousse dure de polymère selon l'étape 5) entre les couches de recouvrement (1, 2) ;
d) la chaleur qui a été introduite lors de la compression des couches de recouvrement (1, 2) dans celles-ci est utilisée pour accélérer le processus de réaction du système de mousse dure de polymère ;
**caractérisé en ce que**,
avant la compression de l'étape 2) et avant la réalisation de l'étape 3), une aide au malaxage liquide (42) est ajoutée dans une ou deux couches de recouvrement (11, 22) du panneau en copeaux de bois ou appliquée sur une ou deux couches de recouvrement (11, 22) du panneau en copeaux de bois, l'aide au malaxage liquide (42) constituant une solution aqueuse ou une dispersion aqueuse, et l'aide au malaxage (42) étant sélectionnée dans un groupe composé d'un ou plusieurs agents tensioactifs ou dans un groupe composé d'un ou plusieurs acides.
